# EUROPEAN PATENT SPECIFICATION

(11) **EP 2 367 416 B1**
(45) Date of publication and mention of the grant of the patent: **16.10.2013**
(21) Application number: 09799398.4
(22) Date of filing: 24.11.2009
(51) Int. Cl.: A01K 1/00

(54) **VENTILATION DUCT SYSTEM FOR EXCHANGING AT LEAST A PART OF THE AIR IN A STABLE SECTION, OR IN A STABLE ARRANGEMENT WITH STABLE SECTIONS, AND METHOD FOR VENTILATING SAME**
LÜFTUNGSKANALSYSTEM ZUM AUSTAUSCH MINDESTENS EINES TEILS DER LUFT IN EINEM STALLABSCHNITT ODER IN EINER STALLANORDNUNG MIT STALLABSCHNITTEN SOWIE LÜFTUNGSVERFAHREN DAFÜR
SYSTÈME DE CONDUIT DE VENTILATION POUR ÉCHANGER AU MOINS UNE PARTIE DE L'AIR DANS UNE SECTION D'ETABLES, OU DANS UN AGENCEMENT D'ETABLES AVEC DES SECTIONS D'ETABLES, ET PROCÉDÉ POUR LE VENTILER

(30) Priority: 24.11.2008 DK 200801659; 13.08.2009 DK 200900926
(43) Date of publication of application: 28.09.2011
(73) Proprietor: MT Højgaard A/S, 2860 Søborg (DK)
(72) Inventor: FRIIS PEDERSEN, Erling, DK-8860 Ulstrup (DK); SØRENSEN, Karsten, DK-8850 Bjerringbro (DK)
(74) Representative: Hauge, Sidsel
(86) International application number: PCT/IB2009/055315
(87) International publication number: WO 2010/058383

(56) References cited:
- DE-B- 1 679 522
- GB-A- 1 187 308
- NL-C- 1 006 238

## Description

The present invention relates to a method, as defined in claim 1, for exchanging at least a part of the air in at least a part of a building having an inner room and a floor. The method is of the kind comprising the steps of from a first station outside the building leading a first amount of air into the inner room of the building or to a space in communication with the inner room of the building via at least one first duct extending below the floor of the building and configured with a number of spaced apart first holes in the longitudinal direction and via at least one second duct extending below the floor of the building and configured with a number of spaced apart second holes in the longitudinal direction, leading a second amount of air out of the inner room of the building or out of a space in communication with the inner room of the building to a second station outside the building.

The present invention further relates to a stable section, as defined in claim 12, in the form of a building having an inner room and a floor. The stable section is of the kind comprising a first station arranged outside the stable section for leading a first amount of air into an inner room of the stable section or into a space in communication with the inner room of the building via at least via one first duct extending below the floor of the building and configured with a number of spaced apart first holes in the longitudinal direction and at least one second duct extending below the floor of the stable section and configured with a number of spaced apart second holes in the longitudinal direction, for leading a second amount of air out of the inner room of the stable section or out of a space in communication with the inner room of the building to a second station outside the stable section.

The present invention also relates to a ventilation duct system, as defined in claim 30, for exchanging at least a part of the air in at least a part of a building having an inner room and a floor, where at least a circumferential wall and a roof e.g. further define the inner room. The ventilation duct system is of the kind comprising a first duct configured with a number of spaced apart first holes in the longitudinal direction, a second duct configured with a number of spaced apart second holes in the longitudinal direction, first means for via a first end of the first duct sucking, pumping or blowing a first amount of air into the inner room of the building or into a space in communication with the inner room of the building through the first holes, and second means for via a first end of the second duct sucking, pumping or blowing a second amount of air from the inner room of the building or from a space in communication with the inner room of the building through the second holes, and wherein the first means and the second means are identical or different.

Traditionally husbandry takes place in buildings, which dimensioning-wise are limited by factors such as e.g. the dimensions of ventilation systems and roof structures, e.g. in a stable building with a width of e.g. approximately 38 m and a length of several times this width. If a desired production capacity cannot be attained in a single such building, several stable buildings are placed parallel next to each other with a mutual distance governed by national or regional building regulations. Thus in Denmark there has to be at least 10 m between two neighboring stable buildings. The parallel-situated stable buildings are interconnected logistically by means of transverse passage buildings to secure and allow for e.g. handling and transport of animals and goods between the stable buildings.

Industrial pig breeding requires e.g. that the pigs are frequently relocated. An ordinary brood sow e.g. is moved about 7 times in one year in connection with change from farrowing booth, insemination, gestation etc.. Each change subjects the pigs to stress, which propagate to the surroundings because of noise and general unrest. When the animals are mowed far and frequently, the stress level increases, and the unrest grows worse in the stable, which is the case in the above-described building arrangements with many long, parallel connected livestock buildings. In this way enormous resources are used on relocating the animals, which means, that the farmer uses a considerable part of his time alone on relocating the animals, and that the animals suffers considerably from stress because of the long and many wanderings. Every relocation affects the effective volume of transactions, because the growth of stressed animals stops up to several days. It is quite bad for young pigs up to 30 kg, whose growth can stop up to one week. If the constructions of the stable buildings and the logistics can be changed in a way in which time and resources can be saved without derogating from the construction regulations, it will at the same time mean a considerable increased animal welfare and strongly improved working conditions for the farmer.

Traditionally the ventilation in a building, such as a stable, takes place by sucking fresh air in under the eaves and distributing it in the room above the ceiling, whereupon the air is sucked down through a porous barrier to the underlying facility. This kind of ventilation is often called diffuse ventilation and is traditionally used in Denmark in the running of the above-mentioned long stables with between 6 and 10 stable sections for achieving an appropriate ventilation.

This kind of ventilation has in itself many weaknesses. The porous barrier is for example blocked up gradually throughout the years, and from an idealistic point of view this barrier ought to be exchanged every 8 year to maintain a satisfactory circulation of air. This is however expensive and laboriously, because the stable section, and possibly the whole stable, must be laid up through long periods. The use of diffuse ventilation in a pigsty also means, that there often is a lot of dust and many ammonia gases in the stable air, and diffuse ventilation therefore has a limited efficient capacity of ventilation.

Therefore there is a big and hitherto unknown need for new livestock facilities, by means of which an optimal animal production, an increased animal welfare and an improved working environment for the farmer can be obtained in the best possible way. Furthermore there is a need for livestock facilities, which easily can be enlarged without problems with logistics, animal welfare and working environment turning up.

One example of ventilation system for stables is known from English patent document no. GB 1470793. Here are used ventilation ducts entirely or partly placed in the floor, for blowing in air above floor level and sucking out air at the outer walls of the stable. This known ventilation system has a very limited distribution and air cleaning capacity and even in small or narrow stables it is necessary to supply the pure air quite close to the feeding troughs and the heads of the standing animals for the new air to be suitable for inhalation.

Known ventilation facilities put many, unpractical and expensive limitations on the design of the buildings, possible arrangement, and the potential later extensions of especially stable facilities. Thus known ventilation facilities constitute an obstacle in the development of new stable constructions, and new thinking within choice and use of ventilation facilities is required.

Consequently there is a need for a new type of ventilation facilities, which can ventilate very big rooms, especially stables, without any problems with among other things irregular air exchange, clogging and deterioration of ventilation installations, and which in use through a longer period of time will be of benefit to both animal and human beings.

In a first aspect of the present invention a method and a ventilation system of the kind mentioned in the opening paragraph are provided for exchanging air in very large buildings, such as big stable sections and stable arrangements consisting of several small or big stable sections.

According to another aspect of the present invention a method and a ventilation system of the kind mentioned in the opening paragraph are provided, by means of which the quality of air in the building can be improved, and which decreases the concentration of airborne dust and ammonia in the air in the building.

In a third aspect of the present invention a method and a ventilation system of the kind mentioned in the opening paragraph are provided, which enables constant and homogenous exchange of the air in a building.

In a fourth aspect of the present invention a method and a ventilation system of the kind mentioned in the opening paragraph are provided, by means of which the air, led to one or more buildings, can be cooled down in summer and heated in winter.

In a fifth aspect of the present invention a method and a ventilation system of the kind mentioned in the opening paragraph are provided, by means of which alternative and logistic advantageously arranged stable structures and stable constructions can be raised.

In a sixth aspect of the present invention a method and a ventilation system of the kind mentioned in the opening paragraph are provided, which reduces obnoxious smells to the surroundings.

In a seventh aspect of the present invention a method and a ventilation system of the kind mentioned in the opening paragraph are provided, by means of which a stable construction easily can be changed and enlarged.

In an eight aspect of the present invention a method and a ventilation system of the kind mentioned in the opining paragraph are provided in a stable or a stable arrangement of the kind mentioned in the opening paragraph, which supply and maintain a selected level of fresh air to the animals.

In a ninth aspect of the present invention a method and a ventilation system of the kind mentioned in the opening paragraph are provided, which minimize problems with the air humidity in the building.

In a tenth aspect of the present invention a method and a ventilation system of the kind mentioned in the opening paragraph are provided, which minimize problems with mould.

In a eleventh aspect of the present invention a method and a ventilation system of the kind mentioned in the opening paragraph are provided, which are easy to clean and maintain.

In a twelfth aspect of the present invention a method and a ventilation system of the kind mentioned in the opening paragraph are provided, by means of which stables with lower roof level than hitherto know, and with lower requirements to the static of the roof construction.

In a thirteenth aspect of the present invention a method and a ventilation system of the kind mentioned in the opening paragraph are provided, by application of which a better animal welfare than hitherto known can be achieved.

In a fourteenth aspect of the present invention a stable section and a stable arrangement are provided, wherefrom ammonia gases can be removed closer to the animals and more efficiently than hitherto known.

In a fifteenth aspect according to the present invention a stable section and a stable arrangement with improved logistic arrangement compared to known stable sections and stable arrangements.

The novel and unique whereby this and further aspects are achieved consist in the fact that the method comprises, that the cross section of the first duct is reduced in the direction from the first end of the first duct towards the second end of the first duct, and/or the cross section of the second duct is reduced in the direction from the first end of the second duct against the second end of the second duct.

The combination of air ducts, which are placed under the floor in the building, and wherein the wall is configured with holes or openings for air passage along the longitudinal direction of the air ducts facilitates specifically the continuous exchange of air in the whole building, including the possible rooms, or other partitioning of the building. The first and second duct can, within the scope of the present invention, be placed almost everywhere under the floor, which provides for a hitherto unknown major freedom, when the arrangement and construction of the building are planned. Thus the placement of the ducts is hidden and not conditional on e.g. the dimensions and strength of the roof construction. When the inlet of fresh air and exhaustion of polluted air take place through each of their duct with a number of first holes and a number of second holes, respectively, the ventilation, i.e. the exchange of air, can take place continuously or be concentrated in the zones, where it is most advantageous. The exchange can also take place by combinations of these ways.

Thus the first duct and the second duct in the ventilation duct system tape in the direction from their first ends towards their second ends. By using thus formed first ducts and second ducts it is ensured, that the necessary air velocity and the necessary air pressure for the desired air exchange are maintained in the entire length of the first duct and the second duct, and it is possible to install longer ducts than traditionally used. Longer ducts increase the design possibilities and the fit up possibilities of the stables, so that stables, which ensure a high level of animal welfare together with a low production price and high productive capacity, to a larger extent than hitherto known can be designed. Pumping distances and dimensioning of fresh air facilities are not decisive for the size and design of the stables, as in traditional stables. The air can be exchanged and added homogeneously and continuously in for example stables with long ducts according to the invention, as the reduced cross section of the first and/or the second duct provides for keeping up the same pressure difference throughout the whole longitudinal extension of the first and/or the second duct, and thus that substantially the same amount of fresh air is supplied through all the holes in the first duct, and that substantially the same amount of polluted air is led out from the stable through all the holes in the second duct.

When the method comprises the step of leading the other amount of air out of the inner room of the building or out of the space in communication with the inner room of the building to the second station outside the building, via one or more intermediate stations, it will be possible, in e.g. a central room or a manure removal duct under the floor to clean the polluted air to a scale, so that the cleaned air can be made to meet national and regional environmental requirements. From the intermediate stations the cleaned air can be led to the second station, which for example can be one or more exits on the roof of the building, whereby the final emission of air from the building to the environment can take place where it is wanted. The second stations placed exterior to the building can easily be hidden or designed so that they not disfigure the entire building. An intermediate station can e.g. be another room where the requirements to air purity are lower, and where the exchange of air can take place after another regime than in the first room.

The above described method can advantageously be used, when the building is adapted for animal husbandry, preferable a stable for pig production, cattle production, sheep production and/or chicken production, thereby providing an indoor climate for animal and human beings, which is far better than hitherto known. When the exhaustion of air takes place at floor level or below the floor level, the most possible dust and for example ammonia polluted air can easily be sucked out, instead of being spread in the room. When the blowing in of clean air also takes place at floor level or below the floor level, the animals benefit maximum of the supplied air, because the animals walk and lie on the floor. Thus fresh air is directly led up to the animals, as well as polluted air is removed immediately from the direct environment of the animals. Thus the quality of the air around the animals can be improved considerably compared to known stables. Other animal productions are intended within the scope of the present invention, such as e.g. animal production related to fur and skin.

The exchange of air can take place continuously, with fixed intervals or in a fixed period of time, optionally in a user-defined time interval. This means that ventilation can be made when needed. For example the ventilation can be shot off in periods, where an area is emptied of animals, as well as the ventilation can be intensified in periods with higher need, e.g. if there is very hot or strongly polluted in the building, or when increased ventilation for other reasons is deemed necessary. When the ventilation is adapted to the need, resources can be saved, which otherwise means an economic strain for the farmer, as well as it is possible to reduce the environmental impact and the electricity power considerably.

The air, which is to be exchanged, can have a content of at least one gaseous or particulate contaminant, which means, that the ventilation system has to be able to process many different air compositions. For example it is important, that the ducts do not block because of dust, and it is also important, that the ducts are proportioned and placed correctly, in order to allow removing gaseous contaminants from the building, before the contaminants are mixed too much with the existing air in the building. The here presented method according to the present invention fulfills both these requirements better than prior art techniques for ventilation of e.g. pigsties.

The air, which via the first duct is led to the inner room or to the space in communication with the inner room of the building, can have a content of an additive, which makes it possible to regulate the indoor climate in the building further. Such additives can be chosen from the group comprising means for binding dust in the air in the inner room, ozone, air borne or air soluble medicaments, air purification means, and odorants. Thus the additives can be means contributing to e.g. improving the air quality in the building, or contributing to e.g. reducing the contamination risk among the animals.

The air, which via the second duct is led out from the inner room of the building or out from the space in communication with the inner room of the building, can be admixed with an additive, preferable an ammonia precipitation agent, and/or be filtered. The environmental conditions are hereby improved further, because the discharge of a.o. ammonia and filterable components contained in the discharge air is removed to an substantial extent or even completely before they reach the surroundings.

The first and/or second amount of air can be led to and from, respectively, the inner room of the building or to and from the space in communication with the inner room by means of pumping means, sucking means or blowing means. When both pumping and sucking means can be used, it is possible to design the arrangement of the stable systems to function optimal in many different constellations. More pumps or blowers can be inserted at different places in the system to optimize operation, the sucking- and/or pumping power can be enhanced in especifically selected spots, if deemed to be necessary. Switching on and switching off of pumps or blowers can be controlled centrally if the inner room of the building and the air inside it are monitored, and representative data are collected and processed on the computer by means of particular designed software. The exchange of air can advantageously be regulated by means of opening and closing of motor-controlled dampers.

The first and/or second amount of air can constitute a subamount of the total volume of air of the inner room, which makes it possible to choose to have a part of the air discharged or supplied at other spots in the inner room of the building, for example under the roof or in areas with especially strong pollution of air.

Advantageously the air, which is led to the inner room or the room in communication with the inner space of the building, can be temperature controlled. The air can be cooled on hot summer days and be heated if needed in cold periods. Heating and cooling can for example take place by means of a geothermal energy plant, which can supply the necessary heating and cooling with a minimal use of resources. Such a temperature control gives an improved working condition, as well as it also increases the welfare of the animals.

Regarding new Danish pigsties, which are put into service after 1 July 2000 it applies, that in sties for pigs over 20 kg, a sprinkling plant or similar has to be installed, in order for the pigs to regulate their body temperature. The requirement is valid for all pigsties established after 1 July 2015. In Danish pigsties for untethered pregnant sows and gilts legally established after 1 January 1999, there are requirements of a sprinkling plant or a corresponding temperature regulation solution, whereby the body temperature of the pigs can be regulated. This requirement applies to all Danish pigsties from 1 January 2014. Since 1 January 2005 there has also been requirements of a sufficient number of sick sties in all Danish pigsties, in order always to have at least one sick sty ready. There are specific requirement of arrangement and space.

Regulation of body temperature by means of air is an attractive alternative to sprinkling plants, which are using big amounts of water. The sprinkling water moistens the bedding and thus expedite the occurrence and possible occurrence of mould, as well as there has to be established a discharge capacity to the sprinkling water.

The flow of the first amount of air through the first duct, and the flow of the second amount of air through the second duct advantageously creates an airflow crosswise a manure removal duct inserted between the first duct and the second duct, which contributes to keep undesired gasses in the manure removal duct and thereby improving the air quality in the room below the manure removal duct, but also in the manure removal duct itself. Thus the manure removal duct constitutes within the scope of the present invention a room in communication with the inner room of the building.

The novel and unique according to the invention furthermore relates to a stable section of the kind mentioned in the opening paragraph, in form of a building, where the cross section of the first duct is reduced in the direction from the first end of the first duct towards the second end of the first duct, and/or the cross section of the second duct is reduced in the direction from the first end of the second duct towards the second end of the second duct.

Such a configured stable section provides very wide limits of and much freedom in proportioning the stable section, because the ventilation system according to the present invention can ventilate very large rooms. The area beneath the roof is kept clear, when both the first and second duct are located below the floor in the stable section, as a.o. it is not necessary to mount ceilings in the stable section, as required, when traditional diffuse ventilation is used.

When the first duct and second duct, configured according to the present invention, are used, it is obtained as described above, that the desired air velocity and the desired air pressure are maintained over the total length of both the first duct and the second duct. Where ducts extends e.g. crosswise the stable sections, the air in for example stables with long ducts according to the invention can be exchanged and be supplied homogeneously as a result of the fact that the reduced cross section maintains the same pressure difference over the whole longitudinal extension of the duct. There is no or only minimal pressure drop in the longitudinal direction of the ducts, and it is therefore possible to led in substantially the same amount of fresh air through all the first holes in the first duct, and to discharge substantially the same amount of polluted air from the stable through all the second holes in the second duct. The high air quality can according to the invention be kept along the whole length of the ducts and in the whole stable section, and within the scope of the present farm buildings, such as stable sections, with a length/ width, which is considerably longer/bigger than hitherto known, without the welfare of the animals are reduced at the expense of demands for cheap and increased production.

Danish pigs may not be constantly kept in darkness. There must be natural or artificial illumination, which corresponds to a light intensity on 40 lux in a period of at least 8 hours. Normally pigsties are' arranged with both artificial illumination and windows. In the stable section according to the present invention windows can be constructed in the ceiling of the stable section, and the need for artificial illumination is thus reduced considerably, and thereby are also operational costs to electricity is reduced.

The ceiling height can furthermore be increased considerably compared to conventional stable construction. A stable section with increased ceiling height can contain more air than stable sections with ceiling and porous barrier, with as a consequence improved indoor climate, working environment and animal welfare. It means as well, that air inlet of fresh air and exhaustion of polluted air can take place, where there is a need for it, that is in the area close to animals and human beings.

The other amount of air can be led out from the inner room of the stable section or from a space in communication with the inner room of the building, including a manure removal duct, to the second station outside the stable section via one or more intermediate sections. When discharge of the second amount of air takes place via an intermediate station, it enables that the polluted air can be cleaned on a central place, before this polluted air is led out into the environment exterior to the building. Hereby the maintenance of accessible possible air cleaning installations is simplified, as well as it can simplify the switch between different kinds of air cleaning or the switch to for example increases cleaning capacity. Furthermore the discharge via one or more intermediate stations to another station, which e.g. can be one or more outlets on the roof of the building, as described for the method according to the present invention, can mean that the discharge of air from the building can take place, where it is wanted, as well as the second stations placed exterior to the building can be hidden or configured in a way so that they not disfigure the entire building, together with maximal exhaustion and cleaning capacity are sustained.

In an advantageously embodiment for a stable section according to the present invention the first amount of air is led into the inner room of the stable section or into the space in communication with the inner room of the building, and/or the second amount of air is led out from the inner room of the stable section or out from a space in communication with the inner room of the building via filter elements. Such filter elements can advantageously clean both the first and the second amount of air, which means, that the fresh air, which is led to the room, and/or the second amount of air that is discharged from the room, respectively, have an optimal quality without odour and pollution generating constituents. The filter elements can be build up in different ways, depending on the purpose they have, and can comprise simple filters, which just remove e.g. dust or insects, as well as advanced filters, which e.g. absorb/adsorb specific chemical compounds or very small particles.

The required number of filter elements can be placed in the ventilation system itself or at inlet to or outlet from the ventilation system. Thus the filter elements can be arranged where it is most expedient. Advantageously filter elements can be arranged in the circumferential wall of the building. Advantageously an embodiment of a stable section comprises a number of manure removal ducts, which extend underneath the floor of the stable section mainly parallel to at least one of the first and/or second duct, and where the second holes in the second ducts are arranged in fluid communication with the stable section via the floor over the manure removal duct, and the first holes are in fluid communication with the stable section via the floor, e.g. close to a wall or partition wall. This enables especially, that exhaustion or discharge of polluted air can take place very close to the biggest source of air pollution, i.e. e.g. close to the animal that produces ammonia and raises the dust, or close to other forms of dust sources. It is shown by the inventor of the present invention, that if just 25% of the exhaustion air takes place via many holes close to the floor, and especially close to the manure removal ducts, 60% of the ammonia pollution in the air in the stable section is removed. Furthermore it means that the first and second holes are kept clean and free of deposits each time the floor in the stable section and the stable section in general are cleaned, which topically happens each time the animals of the stable are relocated to a new area of the stable section or to a new stable section.

In a preferably embodiment of the present invention the manure removal ducts and the first and/second ducts can have a common wall, such that fluid communication with the manure removal ducts can be achieved and ensured in a simple manner. Furthermore, the common wall contributes to reducing weight and size of the entire installation.

Preferably one or more manure removal ducts can be inserted between a first duct on one longitudinal side and second duct on the other longitudinal side, so that the first amount of fresh air can be led directly in via one longitudinal side of the manure removal duct, and the second amount of polluted air can be led out via the opposite longitudinal side of the manure removal duct. When the manure removal duct is inserted between the first duct and the second duct, it is advantageously obtained, that discharge of especially ammonia from the stable section is reduced. Ammonia gases are at substantially degree kept down in the manure removal duct and are not spread up into the stable section to the inconvenience of animal and human beings.

In an alternative embodiment the manure removal ducts and/or the first duct and/or second duct can be put in fluid communication via pipes extending between the first and/or second holes and the manure removal ducts, so that fluid communication between manure removal ducts and ducts do not depend on the distance between these. This alternative embodiment comprises large possibility of variation for design of manure removal ducts, ducts, and first and/or second holes, and their mutual arrangement and placement, and thereby the possibility to create the ideally arranged stable section for a given need and a given task.

A manure removal duct and an associated first or second duct can be proportioned and arranged in relation to each other to prevent solid waste from the stable section from penetrating into the first and/or second duct, respectively. Blocking of the first and/or second holes is avoided by this expedient placement and proportioning, and thereby the need for cleaning the first and second duct, and the first and second holes formed in these ducts, is eliminated or reduced. Usually the blocking of the ducts according to the present invention should not constitute a problem, but cleaning can under special circumstances be deemed necessary.

The stable section can have an inner room or a space in communication with the inner room, which has a content of at least one gaseous contaminant, such as ammonia, and/or at least one particulate contaminant, such as dust. Both the stable section and also the above described method of exchanging at least a part of the air in at least a part of a building, preferably a building, which has at least a circumferential wall, a roof and a floor for delimiting the inner room, are well adapted for use in pig breeding and cattle breeding, which have an inevitable co-production of contaminants and dust.

The air, which via the first duct is led to the inner room or to the space in communication with the inner room of the building, can have an content of an additive, optionally selected from the group comprising means for binding dust in the air in the inner room or the space in communication with the inner room of the building, ozone, airborne or air soluble medicament, air purification means, and/or odorants. The advantages thereof are described above, and in a stable section where the method described above is utilized, a particular ideal indoor climate and a high air quality can be ensured.

The first and/or second amount of air can in a advantageously embodiment be led to and from, respectively, the inner room of the stable section or from the room in communication with the inner room of the building by means of pumping means or sucking means, and the stable section and ventilation system in the stable section for use with the above described method can according to the present invention be proportioned and designed with simple and inexpensive means. The preferred pumping and/or sucking means is able to create a vacuum that high, that the air in e.g. a number of stable sections is exchanged by means of negative pressure.

The first and/or second amount of air constitutes in one embodiment a subamount of the total amount of air in the inner room. If the exchange of a subamount of the air in a stable section takes place as described above in connection with the description of the method according to the present invention, fresh air can, as occasion requires, be led to other sections of the stable section, as well as air with undesired substances can be discharged where it is expedient. Even partly exhaustion only, of polluted air via the second holes near the floor, can ensure a relative high removal of for example ammonia gases.

The air, which is led to the inner room or from the space in communication with the inner room of the building, can preferable be temperature controlled so that the temperature in the stable section or part of the stable section can be controlled as occasion requires, and thereby in a simple way achieve advantageous breeding and living conditions and temperatures in the inner room. Further evident advantages are described above in connection with the description of the method according to the present invention, which advantageously can be carried out in the stable section. Since there is a possibility of using several first stations with air inlet outside the building, it is also possible to control the temperature at different parts of the stable section differently if needed, as well as it is possible to turn off the temperature control, if there is no need for this. The inlet air, which is blown or sucked into the stable section, can for example be led across or through an air conditioning plant, or just across or through a cooling or heating station.

The person skilled in the art will understand, that room temperature, air circulation and dust content are important factors for the well-being of pigs, cattle and other animals. Therefore the air exchange and the ventilation system in a stable or stable section have to be adapted, such that the ventilation air can remove contaminants, undesired substances, surplus heat, and dust particles the best possible.

The stable section can in an expedient embodiment be arranged to be enlarged at least in the longitudinal direction of the first and second ducts. This means that, when constructing the stable section, the farmer can take a later increase of the production capacity, arrangement of the stable section, and/or changes in logistics in connection with relocating animals between areas in the stable section, into account. This can in practice be implemented in that the end wall of the building is not load-bearing, and that the ceiling height and the pitch of the roof are selected so that the depth of the stable section can be increased to the desired size. Likewise, at least the first duct and/or the second duct are pre-proportioned such that ventilation capacity to ventilate and ensure the air quality in the later enlarged stable section is created.

When at least on of the holes in the first and/or second duct extends oblique through the respective wall of the duct in the flow direction of the flowing air and/or oblique in the direction towards the floor, the air can be directed to and from the stable section with an air resistance as little as possible. The risk of blocking of the holes via the floor or completely eliminated.

Advantageously the stable section is divided into subsections separated by walking areas and/or walls, and said subsections can be placed in relation to each other so that a breeding animal's total distance of transport is shortest possible measured during a cycle from insemination to insemination. The traditional, frequent and prolong relocation of animals in stables stresses the animals, which have to be relocated, and disturb the animals remaining in the stable enforcing on these animals inconveniences from unrest and noise generated by the relocation. Relocation of animals contributes to the animals demonstrating a.o. inhibited growth, reduced appetite, and increased susceptibility to illness. By reducing the total, traditionally long distance of transport and the number of relocations the stress level in the stable is reduced.

A stable arrangement comprising at least two, in distance from each other arranged stable sections, can expediently be established such that at least two stable section's second stations are arranged inside or open into the same discharge building, preferably into a discharge tower having an upward discharge end. In this way even one entire stable arrangement according to the invention have room enough for big breeding productions. Furthermore it means that a farmer, who has started with animal breeding in just one stable section, but who wishes to increase his production capacity, has the possibility to build up a new and corresponding stable section in connection with the existing stable section without excessive large costs to air inlet and air discharge systems. This also means, that it is possible to maintain a hitherto unknown optimal logistics in the entire stable facility, and thereby ensure a very great flexibility in the general animal husbandry. The discharged air led can furthermore be cleaned on a central location, and there is no need for separate cleaning arrangements in each single stable section. The space, which are occupied by separate cleaning arrangements in conventional stable sections, can be kept clear and can advantageously be used for animal breeding instead.

When the flow of the first amount of air through the first duct and the flow of the second amount of air through the second duct creates an air flow crosswise a manure removal duct inserted between the first duct and the second duct, the'air pollution in the stable section can be minimized.

The tapered ducts provide together with the crosswise air flow a passage of the manure removal duct, which ensure a hitherto unknown clearing of the inner room in the stable section for contaminants, especially ammonia gases, emitted from the animal excrements and gasses, which secrete from the intestinal system of the animals.

The invention comprises also a stable arrangement comprising at least the above-described method carried out therein.

Even if it rarely the case in existing farms, the stable arrangement according to the present invention provides a quite new possibility for keeping different animals species or the same animal species on different developmental stages in the specific stable sections in the stable arrangement, because a considerable part of the ventilation system is common for all stable sections. To combine the stable sections to one stable arrangement with common discharge building, gives furthermore the possibility of maintaining the other advantages that are, as earlier described, by using intermediate stations regarding cleaning of polluted air, before this air is led out into the nature, as well as the advantages by smaller and easier maintenance of air cleaning installations, etc.. The common discharge building is preferably a discharge tower having an upward discharge end.

A possible geometrical form of the entire stable arrangement is a quadratic structure, or an approximate quadratic structure, where the different subsections in form of functional areas, for example, farrow booths, pregnant sties etc., are distributed so that the total relocation distances of an animal in a production cycle is reduced. In this way the geometrical form contributes to an optimization of the logistics in the stable arrangement according to the invention compared to conventional stable arrangements having parallel connected stable sections with large mutual distance. Thus if the stable arrangement according to the present invention comprises at least four stable sections arranged substantially symmetrically around the discharge building, it is possible to obtain a very big production capacity at the least possible operating costs, and/or a very large increase of an existing capacity.

A stable arrangement having four subsections can also consist of two approximately quadratic stable arrangements, as described above, which possibly are built together viva a central unit containing loading/unloading facilities, forage treatment and storage, personnel areas such as kitchens, toilets etc.. Such a central unit can of course also exist in relation to all previously described stable arrangements and stable sections.

The stable arrangement according to the invention can advantageously comprise at least a stable section arranged for different stages of animal husbandry, and preferably selected from the group comprising stable sections arranged for pregnant animals, a stable section for small animals, a stable section for rearing, a maternity section, such as a farrow section, a calve section, a foal section, and/or a lamb section, a stable section for insemination and/or a stable section for arbitrary isolating animals. This provides the possibility of ensuring the optimal arrangement with respect to both animals and human beings. Each stable section can furthermore be divided into subsections such as areas with different functions and individual fit up. Preferably, each stable section can thus include a single function, but alternatively a stable section can also be divided into more subsections with different functions such as farrow booths, pregnant areas, areas for example for piglets, calves etc., where each of these subsections are placed the best possible way in relation to each other in the individual stable section. This means that stable sections and/or subsections are arranged relatively to each other in a way that the relocations paths are optimized, so that all relocations all in all aim to follow the shortest possible total relocation path during an animals production cycle, e.g. a pigs or a cows production cycle. Furthermore, considerations can have been made to completely avoid transport of piglets or calves before the piglets or caves have reached a certain size. Considerations to that animals in certain subsections or stable areas requires more peace than other, can also have been made, and considerations can have been made to that some animals in periods advantageously must and can have warmer stable conditions than other. Within the scope of the exhaustive and many others will be obvious for the person skilled in the art by reading of the present description.

The stable arrangement can as the stable sections be divided into subsections by walking areas and/or walls and said subsections can be placed in relation to each other so that a breeding animal's total distance of transport is shortest possible measured during a cycle from insemination to insemination

The invention further relates to a ventilation duct system of the kind mentioned in the opening paragraph. The ventilation duct system according to the present invention comprises that the cross section of the first duct is reduced in the direction from the first end of the first duct towards the second end of the first duct, and/or the cross section of the second duct is reduced in the direction from the first end of the second duct towards the second end of the second duct, the first end of'the towards the second duct's first end, where a first duct and a second duct is arranged at a distance from each other or has a common wall.

Such a ventilation duct system is particularly suited for ensuring an air exchange, which is optimal in all areas of'a large room or in a building with a large inner room with subdivision. The first duct and the second duct with several first holes and second holes, respectively, ensures that fresh air is delivered where necessary, as well as polluted air can be removed at several locations along each of said ducts. This new ventilation system also means that it is no longer necessary to have a very high ridge on the building, as is e.g. known from traditional stable buildings with traditional air exchange. A lower ridge is estimated being an advantageous factor when obtaining building permits, which often are difficult to achieve due to various district plans for the area in which the establishment of the stable building is desired. Buildings according to the principles of the present invention do not disfigure the surroundings in the same way as traditional stables. Furthermore the new stable structure with stable sections and stable arrangements wherein the new ventilation structure is implemented means that it is possible to form windows in the roof, which gives a pleasant natural daylight in the stables. This results in a significantly improved working environment for the farmer, and a significantly improved animal welfare, as well as large reductions in electrical lighting.

The first and/or second means for sucking, pumping or blowing air from the first and/or second station can be the same or different.

The tapering arrangement of the first duct and the second duct in the ventilation duct system ensures advantageously that the desired air velocity and the desired air pressure is maintained over the total longitudinal length of both the first duct and the second duct. The air in for example stables with long ducts according to the invention, where the ducts e.g. extends crosswise the stable sections, can be exchanged and led in homogeneously as a result of that the reduced cross section maintains the same pressure difference along the total longitudinal extension of the duct, and thereby that substantially the same amount of fresh air supplied through the first holes in the first duct, and substantially the same amount of contaminated air is discharged through all the second holes in the second duct.

The first duct and the second duct in the ventilation duct system can in a preferred embodiment have a common wall or in another embodiment be arranged at a distance from each other. In the first embodiment the ventilation duct system will be easy to install, as only one single unit has to be transported and laid down beneath floor level. The common wall can furthermore serve as a heat exchange surface between supplied fresh air and discharged contaminated air.

The second embodiment can for example expediently be used when supply of fresh air and discharge of contaminated air must not affect each other, or they for other reason are preferred in distance from each other, e.g. if the air being discharged via the first duct is used as a carrier stream for carrying unwanted substances, e.g. ammonia, which is found in the air in the gap between the first duct and the second duct, into and out of the second duct.

The duct system can be arranged so that the first holes or the second holes are formed in the side or in the area of the first duct and/or the second duct, respectively, facing towards the inner room or towards the space in communication with the inner room of the building, so that it is not necessary to have extra equipment for leading air to and from said ducts. If the ducts are situated beneath the floor in a building, the exchange of air can easily and advantageously occur through the floor or via holes near floor level. In relation to animal husbandry and stable sections this has special advantages, as described above.

If the space in communication with inner room of the building is a manure removal duct, the manure removal ducts can be situated between a first duct and a second duct, and thus the manure removal duct can be passed by a transverse air stream in the direction from the first duct towards the second duct.

In a preferred embodiment a first duct, a second duct and a a manure removal duct inserted between these ducts can advantageously serve for the flow of the first amount of air through the first duct and the flow of the second amount of air through the second duct creates an air flow crosswise the manure removal duct inserted between the first duct and the second duct, whereby larger amounts of ammonia than hitherto known can be exhausted. Preferably a transverse air stream between the first and the second duct is created this way, either alone or as a consequence of the lengthwise air flows in the ducts, or possibly by means of external means blowing in additional clean air or sucking out contaminated air from the manure removal duct.

If the air flow across a manure removal duct has a velocity between 0.1 - 0.8 m/s, preferably 0.3 - 0.5 m/s an effective removal of the ammonia from the air in both the inner room and the space in communication with the inner room, in the present example the manure removal duct. At these air velocities a slightly negative pressure is formed in the manure removal duct in relation to the pressure in the inner room of the building, so that ammonia in the area of the inner room of the building where the manure removal ducts and the inner room are in communication with each other, can be sucked down into the manure removal duct and out via the second duct to a second station or intermediate station.

If the angle between the common wall and the longitudinal flow axis of ae duct is constant in the entire length of the duct a smooth through flow of air in the duct is furthermore ensured. By eliminating kinks and/or stepwise changes in the inner cross section of the duct a continuous, steady, unobstructed, expedient flow through a duct is achieved. An expedient common wall thus has a substantially smooth surface without larger indentations, steps or the like, whereupon impurities can settle.

If the angle between two opposite walls of a duct is substantially constant and less than 90°, preferably less that 60°, and more preferred less than 45° along the entire length of the duct, a continuously tapering duct is achieved, by means of which it is ensured that the air pressure and air speed in the duct is approximately constant in the full length of the duct, and that the supply of fresh air and discharge of contaminated air is substantially the same along the full length of the duct. The constant angle gives a smooth innerside without steps and protrusions to the duct, which makes the duct easier to clean, prevents deposition of matter led out with the second amount of air, or deposition of matter led in with the first amount of air, as well as contributes to maintain a sufficiently high flow without unintended turbulence.

The cross section of the first and/or second duct in the ventilation duct system can have an annular circumference, which at least partly can be circular, oval, elliptic, quadratic, rectangular or polygonic. The choice depends of the demands on the ventilation in the specific building and provides further degrees of freedom for the placement whein installing the ventilation duct system and its possibility for fitting into different building structures. Other internal and/or external annular circumferences and cross sections are also within the scope of the present invention for ventilation and air purification demands for a given building.

In a specially advantageous embodiment of the ventilation duct system according to the present invention, at least one of the first duct and the at second duct can be constructed of a number of series connected duct sections, and preferably both of the ducts can be constructed of serially connected duct sections, for example in the form of prefabricated duct sections, which are provided in a sufficiently large number to ensure economically profitable construction of the duct system, as well as it facilitates the actual installation of said ventilation duct system in that each duct is not to be cast in one independent unit, but can be assembled of prefabricated elements.

The duct section elements can advantageously be manufactured in concrete, as concrete is easy to handle, is strong and durable, and also can resist the aggressive environment present when manure and especially slurry is present A duct can within the scope of the present invention be of other materials than concrete, such as e.g. a plastic material, which as concrete is resistant to chemical as well as physical influence from the surroundings.

A ventilation duct system with ducts with reduced cross section is here described in connection with a stable but can also be imagined in other contexts where the challenges to the ventilation are the same. Thus the use can within the scope of the present invention be in e.g. rooms, areas and buildings of different nature, where there is a need for air exchange in particular in more subareas.

The ventilation duct system can be dimensioned to ensure that even very large areas in e.g. very deep buildings achieve an optimal air exchange, without occurrence of areas with unnecessary strong draft, as is known from traditional systems where inlet and outlet take place through few an by far larger inlet and outlets towards areas, inclusive subareas, which most often implies that there will be a draft, and that it will be too warm or too cold in parts of the area and/or the subareas.

Such problems are very well known from a.o. open-plan offices and will accordingly be remedied by use of the ventilation duct system according to the present invention. In multi-story buildings the ventilation duct system can be situated in the horizontal divisions between floors, which allows for air exchange from both ceiling and floor. Under such other conditions in other types of buildings the earlier described method for air exchange can also be applied to the extent, where it is appropriate. For example a second amount of air, which is discharged through this or the second duct(s), can be let to a central air treatment station, before it is led out of the building or re-circulated as clean air.

The ventilation system, the method, the stable sections and the stable arrangements according to the present invention can be applied, arranged and designed for use with any type of animal breeded in stables by taking into account the special needs of the individual animal species.

The number of occurrences of hoof diseases and fall injuries due to dirty and slippery floors in traditional cattle stables means that slatted floors is rarely used in cattle stables with traditional ventilation systems. The ventilation system according to the invention provides the possibility for safe use of slatted floors in cattle stables, while at the same time more stringent regulations on ammonia pollution can be complied with. The invention thus provides simple means for improving the health amongst the animals. Within the scope of the present invention it is possible to chose different and individually combined configurations, design and arrangements of ventilation systems, stable sections and stable arrangements, also within the same stable section, for the first ducts and the second ducts, depending on the main objective in a given case. This means that the stable section can be constructed based on the ventilation duct system, e.g. such that the ventilation duct system in some areas mainly is used to remove ammonia in relation to the manure removal ducts and in other areas is used to ensure good air exchange in the stable area itself.

The ventilation duct system and the method according to the present invention can be used together with other air exchange systems if desired. In some stable types it is for example an option to use the ventilation duct system and the method mainly for removing ammonia from open manure removal ducts and allow the general air exchange in the stable to be realized by other means. This is possible as the coexisting ventilation systems in such stables can be made independent of each other and only interact to a desired extent. This is for example achieved by regulating the air velocity in the first and the second duct, and thus also regulate the pressure difference between the first and second duct, and hereby manage how large a part of the air exchange in the stable section is performed via supplied fresh air and discharged contaminated air in the manure removal ducts. Especially advantageously a ventilation ducts system configured to remove gaseous ammonia from the manure removal ducts can be used in cattle stables with natural ventilation.

The above described ventilation duct system and method can advantageously be used in the above described stable section and/or the above described stable arrangement for optimization of the total distance of transport of an animal, measured during a cycle from insemination to insemination so that this transport path is the shortest possible. Not only does this reduce the stress levels of the animals, but due to the shorter distance, the farmer saves time to follow the animals between different habitats, and the invention provides a significantly improved logistic for animal breeding.

The invention further relates to a system for planning, arranging and/or operation of the stable section and/or stable arrangement as described above. The system comprises providing a stable section or a stable arrangement divided into subsections separated by walking areas and/or wall, where said subsections are arranged relatively to each other in a manner ensuring that the accumulated distance of transport, measured during a cycle from insemination to insemination is the shortest possible. The system provides significant reductions in man-hours and reduces the stress levels of animals and humans beings.

The system comprises computer means programmed for optimizing the planning, arrangement and/or operation to the best possible logistic. Specially developed software programs can handle status in the different parts of the stable section or the stable arrangement, so that there at any time will be overview of the exploitation of these.

The above described inventions will be described in further details with reference to the drawing, where the figures show exemplary embodiments, which are not to be construed as limiting to the scope of the invention. Modifications, variants and combinations are thus intended within the scope of the invention.
Fig. 1 shows a diagram of a first embodiment of a stable arrangement according to the invention.
fig. 2 shows, seen in perspective, a fragment of an exemplary embodiment of a subsection in a stable section arranged according to the invention for use with the method according to the invention,
fig. 3 shows, seen in perspective, an embodiment of a duct part section according to the invention,
fig. 4 shows, seen in perspective, another embodiment of a duct part section according to the invention,
fig. 5 shows a section taken along the line V-V in fig. 3 with two duct systems arranged on opposite sides of a walking area and two manure removal ducts,
fig. 6 shows an overall view of a stable section having a logistic arrangement according to the invention,
fig. 7 shows an alternative logistically arranged stable section,
fig. 8 shows a comparative logistically arranged stable section,
fig. 9 shows schematically two stable sections connected via the same common outlet duct,
fig. 10 shows schematically, seen in perspective, a stable arrangement with two stable sections discharging contaminated air to a common intermediate station building,
fig. 11 shows an overall view of a cattle stable according to the invention,
fig. 12 shows a section taken along the line XII-XII in fig. 11,
fig. 13a and 13b, shows an end wall with filters for incoming air, and an end wall with filters together with an air treatment and air exhaust plant,
Fig. 14 shows an alternatively arranged ventilation duct system in a cattle stable with a slatted floor.

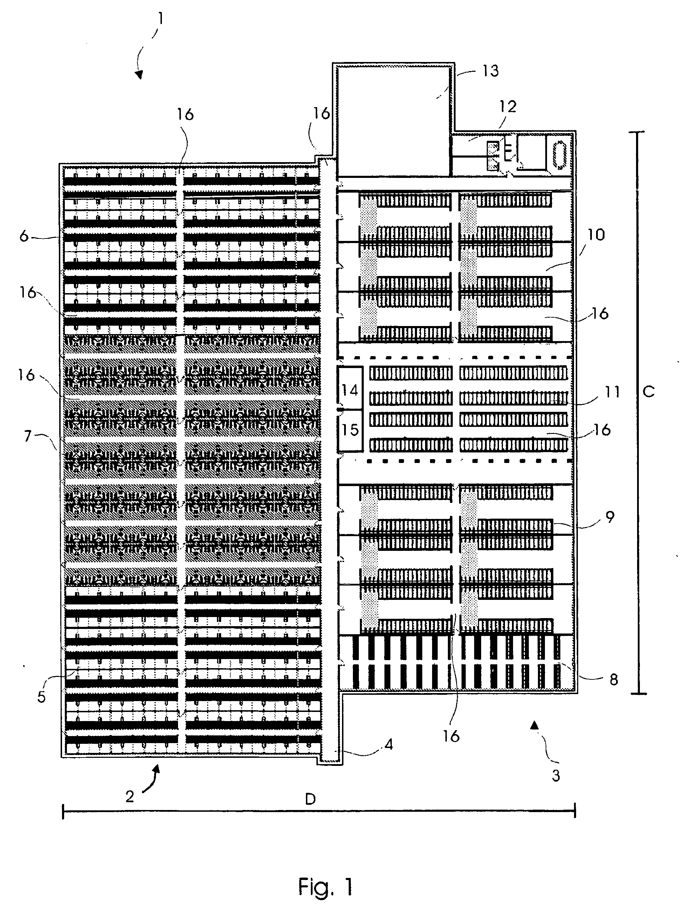

Fig. 1 shows an exemplary stable arrangement 1 according to the present invention consisting of a first stable section 2 and a second stable section 3, which are interconnected via an intermediate station 4, in form of a building 4. The first stable section 2 is divided in three subsections, two climate stables 5,6 for piglets and a farrow section 7 inserted between the climate stables 5,6, respectively. The second stable section 3 is divided into four subsections, a porker stable 8, two pregnancy stables 9,10, and a boar service stable 11 inserted between the two pregnancy stables 9,10, respectively. Furthermore the stable arrangement 1 contains a personnel section 12, a forage section 13, a pharmacy/veterinary room 14 and a technique room 15. The stable sections 2,3 are divided by several walking areas 16, inclusive a walking area in the intermediate station 4. The stable arrangement 1 has a total depth D, which in the shown example is approximately 77.5m, and a total width C, which in the example shown in fig. 1 is approximately 93m and extends across the first stable section 2 and the second stable section 3.

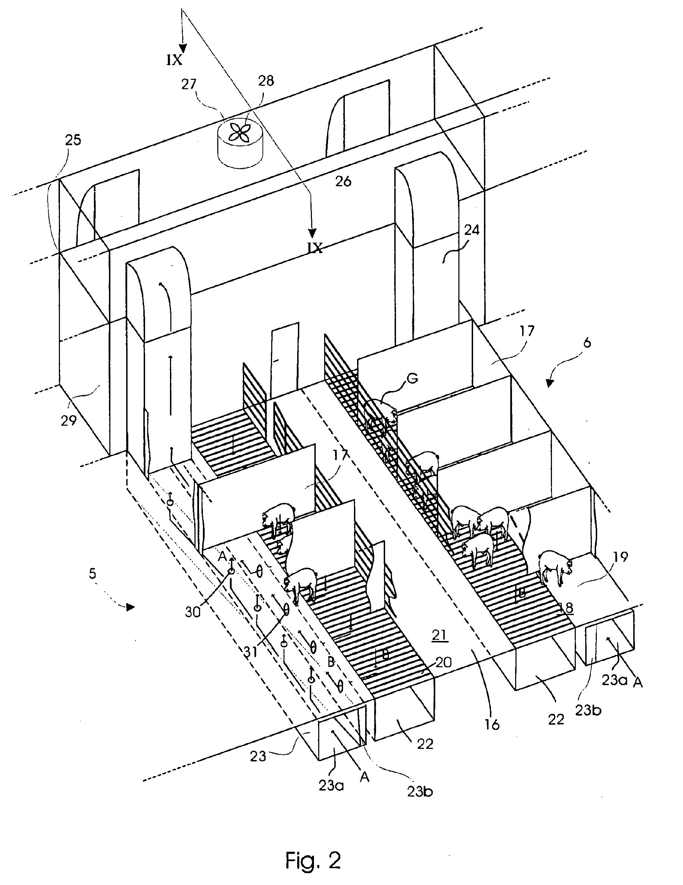

Fig. 2 shows, seen in perspective, a fragment of the two climate stables 5,6 arranged for piglets G, indicated in fig. 1, with a total of nine booths 17, five booths 17 and four booths 17 on each side of a walking area 16, respectively. The number of the booths are only indicated as an example and shall not be construed as limitating for the invention. The booths 17 in the climate stables 5,6 has a floor 18 consisting partly of resting slabs 19 and slurry grating 20 for the piglets G. The resting slabs 19 cover about half of a booth 17, and the slurry gratings 20 cover the remaining part of each booth. The floor 18 further comprises a walking area 21. Beneath the slurry gratings 20 a manure removal duct 22 is arranged, and beneath the resting slabs 19 a ventilation duct system 23 is arranged for exchanging the air in the stable section by passing below the floor 18, for example by means of negative pressure provided by means outside the limits of the stable section. The ventilation duct system 23 has a first duct 23a and a second duct 23b. The one end of the second duct 23b opens into an outlet duct 24, which again opens into a common outlet duct 26 in an intermediate station 25, which are shared for both shown stable sections and all further stable sections in the stable arrangement shown in fig. 1. The common outlet duct 26 has a ventilation exit 27, for creating a negative pressure with a blower 28 arranged therein, by means of which negative pressure it is possible to discharge the exhaust air, i.e. the contaminated air from the stable section 5,6, and possibly clean the contaminated exhaust air by means of not shown means in e.g. outlet ducts, means localized elsewhere in the intermediate section 25 or localized outside the intermediate station 25. The intermediate station 25 extends in the length direction perpendicular to the stable sections 5,6's width direction. Beneath the common outlet duct 26 a through going walking area 29 is arranged, which contributes to the stable arrangement being so logistically arranged that a pig during a production cycle is relocated the shortest possible distance, as well as the pig breeder and his staff also must move less than usual and thus save time. The intermediate station 25 and the walking area 29 can advantageously be at least a part of the intermediate station building 4 shown in fig. 1.

The first duct 23a of the ventilation duct system 23 has along its length direction a number of first through going holes 30 formed in its wall, and the second duct 23b, has along its length direction a number of second holes 31 formed in its wall. The holes 30,31 are in fig. 2 shown schematically and will be described in more detail with reference to the following figures. The holes are furthermore indicated with different cross sections, but can have any imaginable shape within the scope of the invention. The holes 31 in the second duct 23b are arranged facing the manure removal duct 22 and extend towards this manure removal duct in an angle of typically 45°. This means that the holes point in the direction from the manure removal duct and down, as well as in the flow direction. The first duct 23a's row of first holes 30 distributes, as indicated by the arrows A, a first air flow, e.g. fresh air, to the climate stables 5,6 directly below the piglets G, and through the second duct 23b's row of second holes 31 a second air flow is drawn, as indicated by the arrows B, out from the climate stable 5,6 through the slurry grating 22, where the contamination from the piglets G is largest, and in into the second duct 23b. The contaminated air B is sucked up through the outlet duct 25 and further up into the intermediate station 25, after which it is led out of the stable arrangement 1 via the ventilation exit 27.

Specific embodiments of the first and second duct will be described below, and all of the shown ducts and arrangements of ducts can be utilized stable sections and stable arrangement shown in the figures, as well as in any other building where air must be exchanged. The choice depends on the need for air exchange and the spatial restrictions, as well as the buildings other design demands, as well as determined by the building regulations.

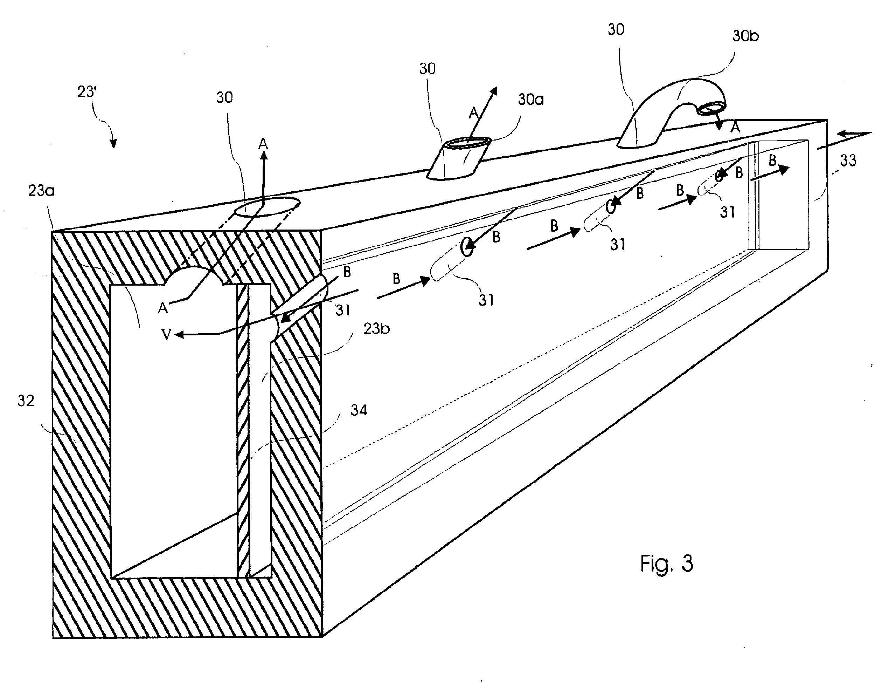

Fig. 3 shows a preferred embodiment of a duct section 23' for a ventilation duct system 23, which e.g. can be the one applied in the stable sections 5,6 in fig. 2. The duct section 23' has a substantially rectangular cross section, a first end 32 and an opposing second end 33, and a partition 34 extending in the length direction, the partition longitudinally and diagonally divides the ventilation duct system 23 in a first duct 23a, which has a cross section which is reduced towards the second end of the duct section 24', and a second duct 23b, which has a cross section, which is reduced towards the first end 32 of the duct section 23'.

A ventilation duct system 23, which can consist of a single continuous duct section 23' or more duct sections 23' placed in continuation of each other, is installed below the floor in a stable section in a manner so that the first duct 23a's first end 32 is in communication with a first station (not shown), e.g. outside the stable arrangement 1 shown in fig. 1, so that fresh air or air with a preferred additive can be delivered inside the stable section's room from the first station outside and up through the floor. The wall in the first duct 23a has a row of first holes 30, which here is shown to extend oblique through the wall, e.g. in an angle of 45° up towards the floor and in an angle of 45° longitudinal through the wall parallel with the flow direction of the air. If the ventilation duct system 23 is composed of more duct sections 23', the duct sections 23' is formed so that the transition between two duct sections 23' is continuous and smooth.

The ventilation duct system is installed with the first duct's first holes 30 localized all the way below a floor in a stable section, e.g. near the wall by the piglets resting areas. The first duct 23a's inner through going space or channel tapers smoothly towards the opposite second end 32, and the air, which as indicated by the arrow A, is supplied through the first holes 30, is sucked up through the floor and is, distributed in the room of the stable section due to the applied negative pressure. In the embodiment shown in fig. 3 of a ventilation duct system 23' according to the invention the first holes are provided with different types of distribution pipes 30a, 30b for controlling the supplied air in the wanted direction towards the stables section's floor, e.g. in the booths, so that the air can be supplied locally and close to the animals. The type of distribution pipes can be the same or different, as well,as distribution pipes can be completely left out. As the first duct 23a's cross section is reduced in the direction towards the second end 33 of the ventilation duct system 23' an approximate constant differential pressure, (i.e. the pressure difference between the pressure on the inner side of a duct and the pressure in the stable) along the full length of the first duct is maintained.

The second duct 23b's configuration is based on the same principle as the configuration of the first duct 23a. A row of second holes 31 extends oblique through the wall through the wall of the second duct 23b, e.g. in an angle of 45° relatively to the overlaying floor and in an angle of 45° longitudinal through the wall parallel with the flow direction B of the air, so that contaminated air is evacuated from the stable section, e.g. as described for fig. 2. As the second duct 23b's cross section is increased towards the second end 33 of the ventilation duct system 23, a mainly constant differential pressure along the full length of the first duct is maintained.

The first duct 23a's wide end constitutes the first duct's first end and the first ducts pointed end constitutes the second end of the first duct. The wide end of the second duct 23b constitutes the first end of the second duct and the pointed end of the second duct constitutes the second end of the second duct.

As it is possible to maintain a constant differential pressure along the length of both ducts, all animals will be exposed to the same gentle and effective air exchange, thus the animals are neither exposed to unnecessary draft nor must they stay in heavily contaminated air for longer time than absolutely necessary. By removing the contaminated air, e.g. air with a large content of dust and ammonia, from the immediate surroundings of the animals, the air removal distance is made shorter than in many known stable constructions. Supplied air can easily be cooled or heated before it is led through a ventilation duct system according to the present invention via the floor into the stable. Tempered air can replace water as means for adjusting the body temperature of the animals so that expensive water sprinkling systems at least partly can be left out. This further helps to reduce the odour problems from a stable.

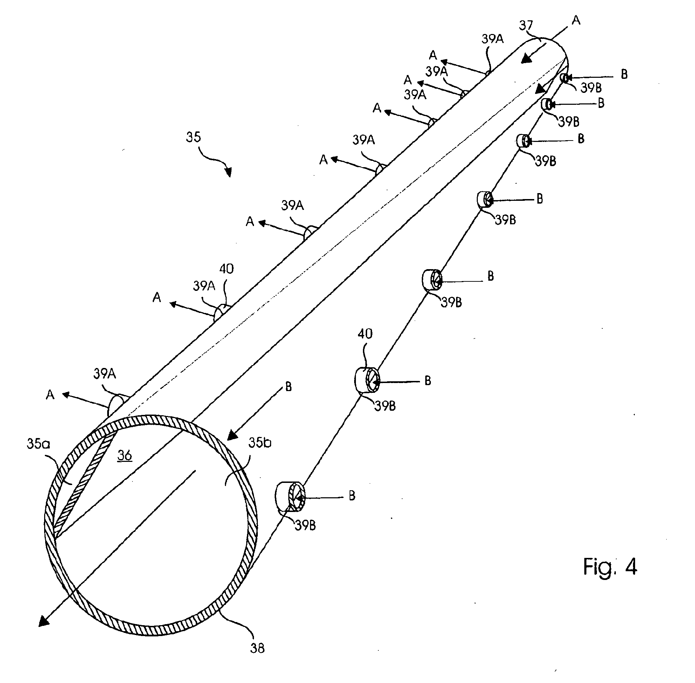

Fig. 4 shows an alternative embodiment of a duct section 35 for a ventilation duct system according to the present invention, where the wall of the duct section for clarity is shown as being transparent. The duct section 35 has a circular cross section and is divided into a first duct 35a and a second duct 35b by a partitioning wall 36. The duct section 35 has a first end 37 and a second end 38, and the cross section of the first duct 35a is reduced towards the second end, and the cross section of the second duct 35b is reduced towards the first end in a similar way as described for the embodiment shown in fig. 3. The first duct has a row of evenly distributed first holes 39a along its length direction, and the second duct 35b has in a corresponding manner a row of second holes 39b. Both the first and second holes are provided with pipe extensions 40, which are not always necessary though.

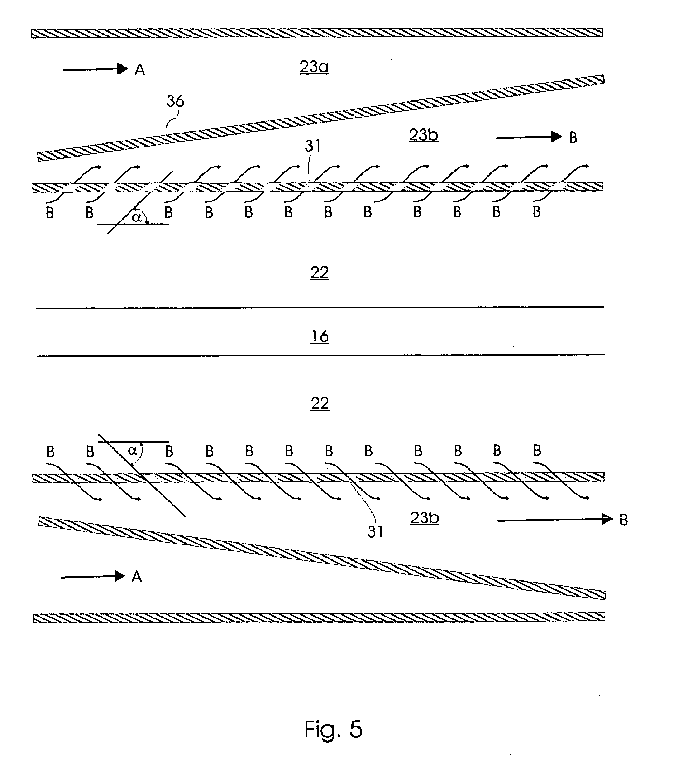

As it will be understood from the schematic diagram shown in fig. 5, in which the section through the duct system is taken along the line V-V in fig. 3, a second hole 31 can in a particularly expedient embodiment extend in an angle through the duct section 23's wall, in such a way that the opening facing the duct's inner through-going passage is localized closest to the air's immediate longitudinal flow direction through the respective duct. This means that the hole's inlet opening and exit opening are longitudinally offset with respect to each other, in a manner where the air is allowed to pass out of the duct at lowest possible friction. As the section V-V is made below the duct's upper wall, from where the holes extend offset into the first duct, these cannot be seen in fig. 5, but appear in the oblique cut through the ducts, as shown in fig. 2.

Within the scope of the present invention this offset provides an arbitrary hole through the duct's wall, where the hole can extend in the longitudinal direction in an angle from within and out of the duct, but also assume an angle with respect to the above floor. Both of these angles can freely be selected between e.g. 0 - 90°, more preferred between 20-89°.

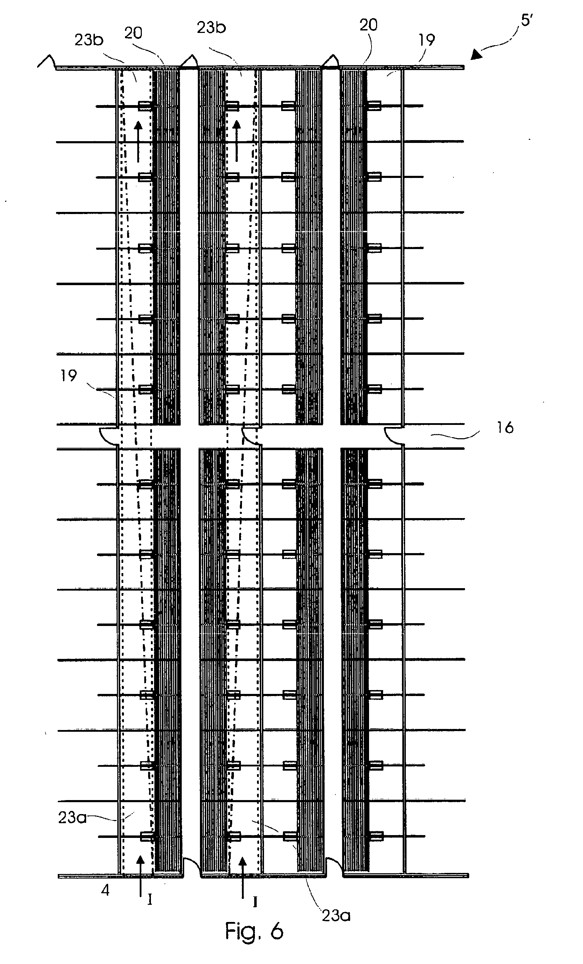

Fig. 6. shows a section of a stable section 5, in form of a climate stable wherein piglets G can stay. The section of the climate stable shows four subsections, each having a center walking area 16 situated between two rows with each twenty-two booths 17. In the area of each booth closest to the walking area 16, the floor consists of a slurry grating 20, and in the area furthest away from the walking area 16 and contiguous to a sty I the adjacent section the floor consists of a solid resting slab 19. In each end of the walking area 16 is an exit towards the walking area 16 and out of the stable section respectively. Below the resting slabs 19 parallel with the center walking area 16 the ventilation duct system 23 described in fig. 3 is installed. The first ventilation duct 23a has its wide end extending towards the outer wall of the stable arrangement, and through this wide end fresh air is drawn in. A part of this fresh air runs through the full length of the first duct 23a and runs out through a row of first holes 30 and further into the stable section. The air coming in from the first station is indicated with arrows I. The second duct 23b has its narrow end extending towards the outer wall of the stable arrangement and its wide end in the opposite direction, i.e. towards the intermediate station building 4, where its wide end is in communication with an outlet duct 24, which again is in communication with a common outlet duct 26, as shown in fig. 2. In a climate stable 5 the piglets G walks around freely in the pigsties and can by themselves find to where the air quality is best, but in the pregnancy stable, where the sows are fixated, it is a clear advantage if the fresh air is let out of the first duct in immediate vicinity of the sow's head, as the sow's possibility of moving is either non-existing or very limited.

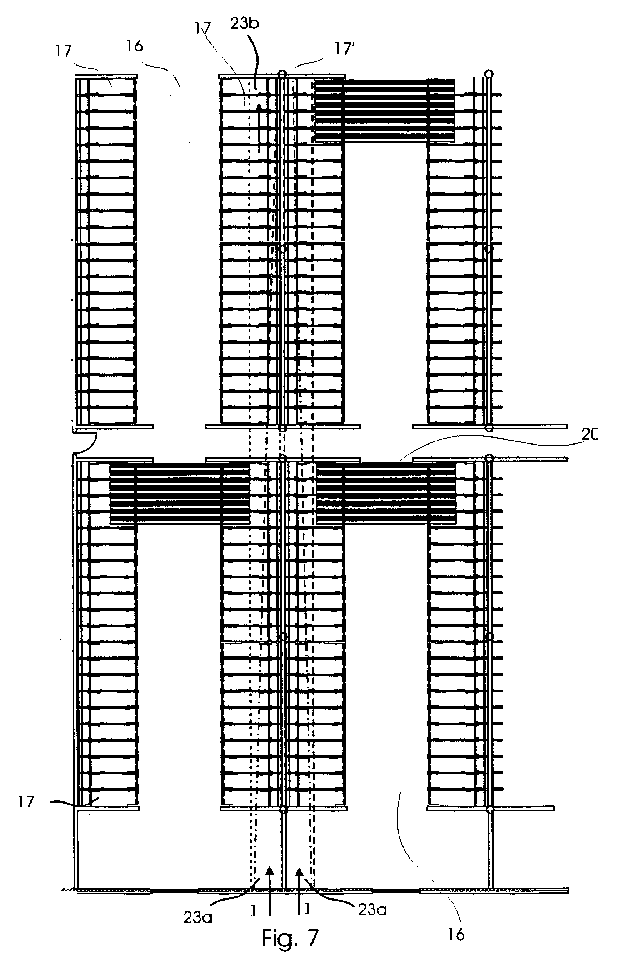

Fig. 7 shows a section 9' of a pregnancy stable 9. The basic principles in the pregnancy stable is known from the climate stable shown in fig. 6, and for like parts like numerals are used. In the shown example each booth 17 is elongated and narrow so that it only leaves room for one animal (not shown).

The animal is standing with the nose towards the back wall 17' of the booth 17, and directly in front of its head fresh air 30 is let in. The sows rear part is facing the walking area 16 which here consists of a slurry grating 20, as well as the half of the floor in the booth 17 facing the walking area 16 consists of a slurry grating 20. For clarity said slurry gratings 20 are only shown schematically in three areas but actually extents in the full length of the walking area 17, i.e. the slurry gratings constitute a part of the floor in all of the shown booths even if it is not shown in the figure. As in fig. 6 the air coming in from the first section is indicated by arrows I.

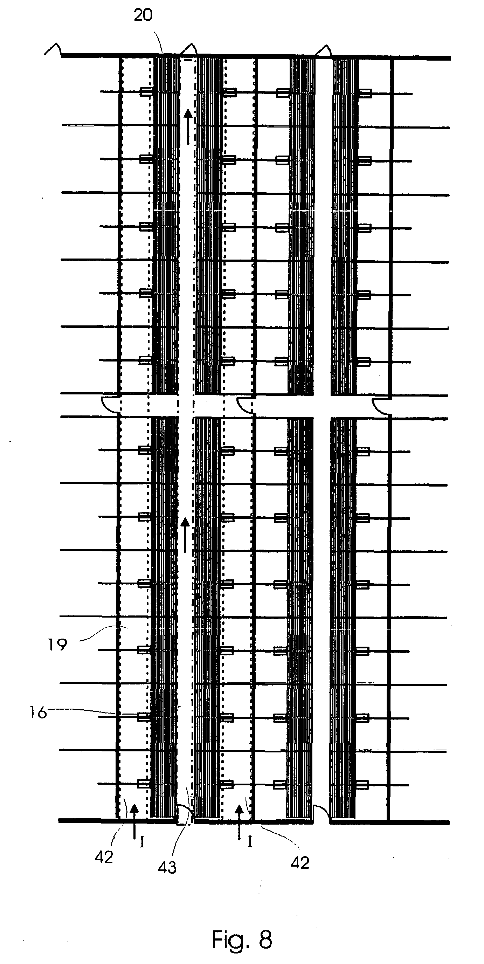

Fig. 8 shows a comparative example of a stable arrangement 1, where the first duct 42 and the second duct 43 is situated beneath the floor in distance from each other without a common oblique partitioning wall. The actual stable section is the same as the climate stable for piglets described in fig. 6.

The ventilation duct system is distinct from the earlier described as three ventilation duct are provided, two first ducts 42, leading fresh air into the stable section, and a second duct 43, exhausting contaminated air from the stable, respectively. The two first ducts 42 are situated below each their row of resting slabs 19, and the second duct 43 is situated below the floor in the walking area 16. Neither the two first ducts 42, nor the second duct 43 are tapered, but have the same cross section along the full length of the duct 42,43. Due to the lacking tapering it is not possible to suck as large quantities of contaminated air out of the stable section, as passages are used, as an air loss and pressure loss occur during the passage out through the first and second holes 30,31. This means that only approximately 25% of the air in the stable arrangement can be exchanged through the floor if this ventilation constellation is chosen. However measurements have shown that due to the expedient position of the holes 31 for sucking out the contaminated air, i.e. the placement directly towards the manure removal duct 22 through holes extending though the second duct in an angle in the length direction, so that the pressure loss is the smallest possible, still 65% of the ammonia in the stable arrangement is removed, which provides a significantly improved indoor climate than when traditional diffusion ventilation is used. As in fig. 6 the incoming air from the first station is indicated by arrows I.

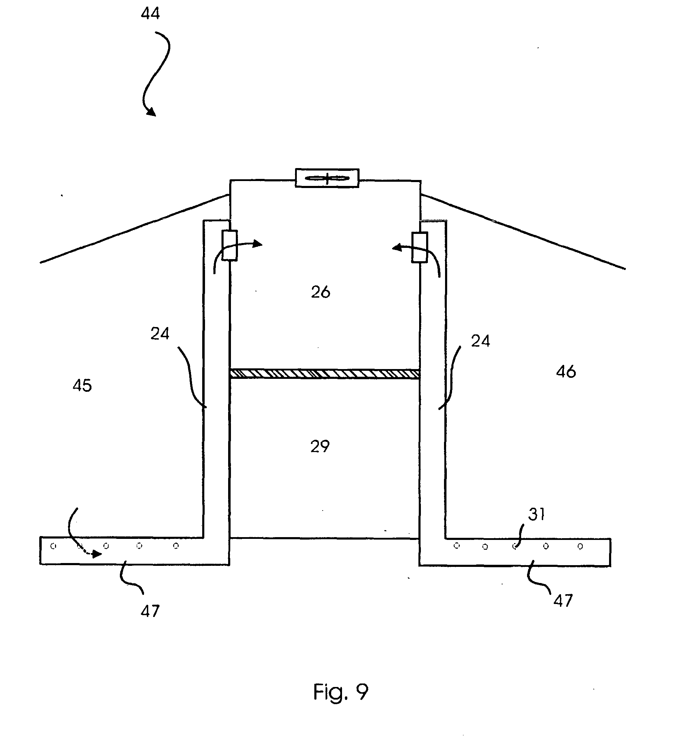

Fig. 9 shows schematically a section through two stable sections connected to the same outlet duct 26. The stable arrangement 44 shown in fig. 9 consists of a first stable section 45 and a second stable section 46, assembled around a central intermediate station building 4. Beneath the floor in the first stable section 45 and the second stable sections 46, respectively, is a second duct 47 leading contaminated air out of the stable section 45,46 through a row of holes. The air streams from the second duct 47 into a common outlet duct 24 for finally flowing into a common outlet duct 26, whereto all the exhaust air from the stable arrangement is let. Both the outlet duct 24 and the common outlet duct 26 can be equipped with different means 28 for sucking or blowing contaminated air out from the stable sections, but can also be equipped with different means for, for example, shutting off the air flow completely and the like. Typically the exhaust is controlled by means motor regulated dampers. Both the common outlet duct 26 and the outlet duct 24 can furthermore be provided with means for cleaning the contaminated air before it is let out of the stable arrangement through the valve 27 in the roof of the intermediate station building. Under the common outlet duct 26 is a service walking area 29, which as the common outlet duct 26 extends in the full width of the stable arrangement 44. The service walking area 29 can be used for all relevant aspects of the daily work incl. relocation of animals, general passage, transport of light machinery etc. The roof on the first and second stable section 46 is slanted but with a lower rise than traditionally as the ventilation duct systems are situated beneath the floor instead of in the space between the ceiling in the stables sections and the roofs hereof.

The outlet ducts 24, the common outlet duct 26, the central intermediate station building 4,25 and the valve 27 can be denoted as the ventilation duct system's second station. The second station can also be imagined placed completely outside the stable arrangement 1. The first station's of the ventilation duct system are as previously mentioned situated along the outer side of the outer wall of the stable arrangement 1 and are not included in any of the figures. The first stations(s) are designed in order to prevent the inlet of undesired objects as birds, insects etc., as well as they are screened to avoid rain and snow fall from entering and are placed at a height so that problems with vermin as rats are avoided. Furthermore cleaning of the inlet air is also a possibility if it is found necessary.

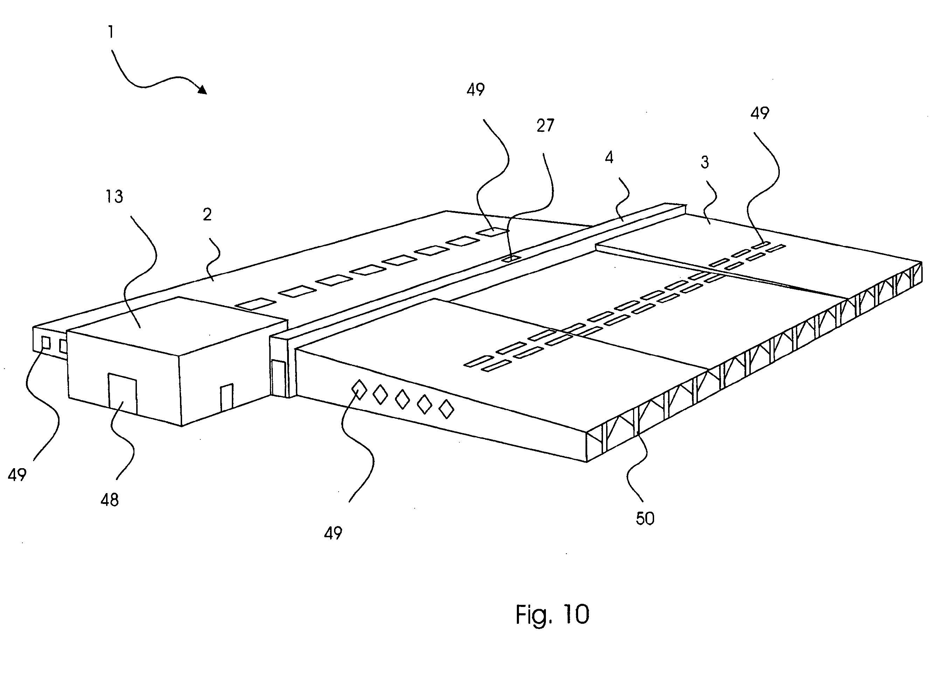

Fig. 10 shows schematically and seen in perspective a stable arrangement 1 with two stable section 2,3 discharging contaminated air to a common intermediate station building 4. Each stable section 2,3 consist up to several subsections, for example the second stable section consists of three subsections 5,6,7, as described in for example fig. 1. The one stable section 2 extends into a forage section 13 having a gateway 48, which gives easy access for a truck or similar. Both outer wall and roof in the stable arrangement 1 have a number of windows 49 securing daylight inside the stable arrangement 1. One end wall in the second station 3 has a number of doors 50 with belonging windows providing additional access to and from the stable arrangement 1, and also constitutes extra escape routes.

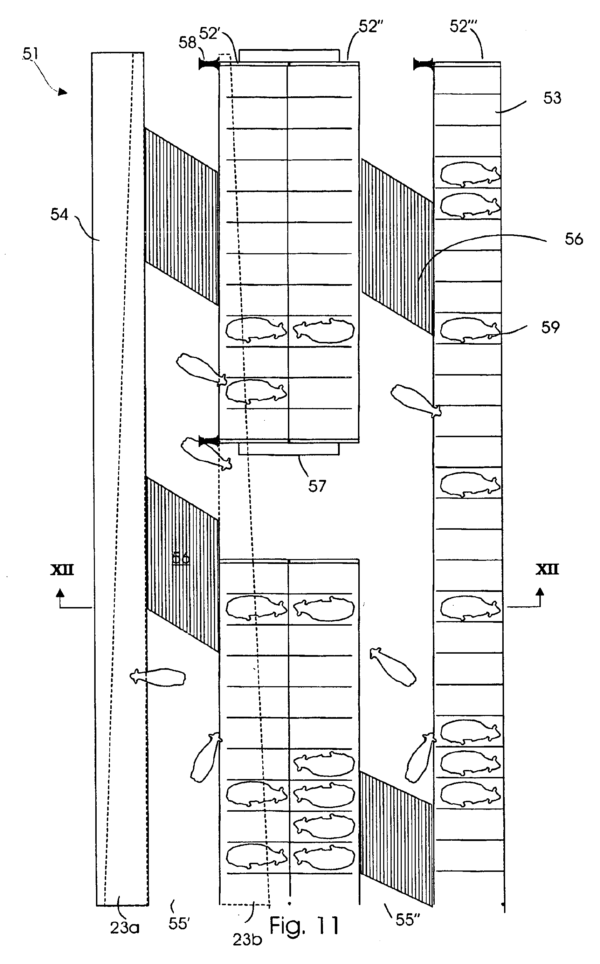

Fig. 11 shows a section of a section of a stable section 51 arranged for cattle hold. The section of the stable section 51 shows three rows 52',52'',52''' of waiting booths 53, a feeding table 53 as well as two walking areas 55',55'' with a slatted floor 56. For clarity the slatted floor 56 in fig. 11 is only illustrated in some areas but it is to be understood that the slatted floor 56 extends in the full length of the walking areas 55',55''. The stable section 51 furthermore comprises a drinking unit 57, cow brushes 58 as well as a number of cows 59. With a broken line the placement of a first duct 23a and a second duct 23b is indicated beneath the feeding area 54 and a row of waiting booths 52', respectively. The first duct 23a and the second duct 23b are arranged so that one longitudinal side of the ducts adjoins each longitudinal side of a manure removal duct (not shown) placed beneath the slatted floor 56, that constitutes the walking area 55'. Similarly a first duct 23a and a second duct (not shown) are arranged around a second manure removal duct beneath the walking area 55''.

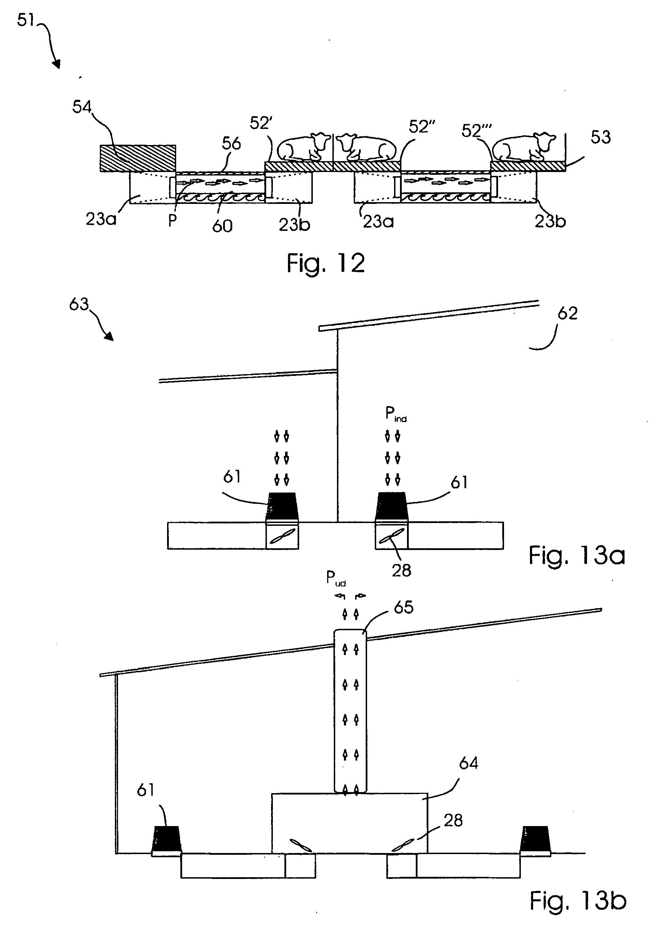

Fig. 12 shows a section taken along the line XII-XII through the stable section 51 shown in fig. 11. As in fig. 11 two manure removal ducts 60 beneath slatted floors 56 are shown. Along a longitudinal wall each manure removal duct 60 adjoins a first duct 23a, and on the opposite longitudinal side adjoins a second duct 23b. Within the scope of the invention the arrangement can equally well be reversed and can be adapted to the ventilation requirements and needs of a given stable arrangement. The ducts 23a,23b are localized under floor level. A feeding table 54 is localized above a first duct 23a, waiting booths 53 are localized above a second duct 23b and above a first duct 23a. There is fluid communication from each first 23a and second duct 23b to the manure removal ducts 60 via openings (not shown) in a upper part of the ducts 23a,23b. These openings can be of different designs depending on e.g. wall thickness of the ducts 23a,23b, but in a preferred embodiment the connection pipes are placed in an angle of 45° so that the flow conditions meet the demands on the ventilation. As illustrated with arrows P in each manure removal duct 60, in this configuration of the first ducts 23a, second ducts 23b and the manure removal ducts 60 an air stream is created across each manure removal duct 60, in the direction from the first duct 23a towards the second duct 23b. Hereby it is ensured that gaseous ammonia from the manure in the manure removal duct 60 does not diffuse up into the stable section 51, but instead is sucked out via the second ducts 23b. Optimally the air velocity in the first duct 23a and the second duct 23b is selected so that a slight negative pressure is created in the manure removal duct 60. This ensures that gaseous ammonia from animal excrements and manure residues, which has not fallen through the slatted floor 56, but is situated on or close to the slatted floor 56, is sucked down into the manure removal duct 60 and out via the second ducts 23b. A suitable velocity for the air flow has been shown to be 0.1 - 0.5 m/s, but can in each stable facility be adjusted to the dimensions of e.g. the manure removal ducts 60. The air quantity blown across the manure removal duct 60 corresponds to approximately 10 - 25% of the theoretical ventilation need for the stable section 51. A stable section 51, arranged as the stable section shown in fig. 12, can ensure a minimum of 75% of the ammonia gases from the manure removal ducts 60 is removed and is not diffused in the stables causing nuisance for animals and humans.

Fig. 13a and 13b show schematic examples of the different means for operation of the ventilation duct system 23 in the stable sections of the buildings. Fig 13a shows filter elements 61 placed in the house end 63. The clean air is sucked in through the filter elements 61, as indicated by the arrows P_{ind} The clean air is distributed in the stable and/or manure removal ducts, which are in communication with the inner room of the building, i.e. the stable room, via the first ducts 23a. The filter elements 61 can freely be adapted to cover the need for cleaning which might be in one or more stable sections at a given time depending on the number and type of animals and depending on which contaminants the incoming air contains. Fig. 13b furthermore shows how an air cleaning plant 64 is situated at the house end 62 of the building 63. Contaminated air, sucked out from the stable and/or the manure removal ducts in communication with the stable room, is led into the air cleaning plant 64 wherein this contaminated air undergoes a cleaning process, which is chosen depending on the conditions, i.e. for example from quantities in need of cleaning, level of contamination and environmental restrictions. If for example a acid cleaning plant is chosen, the implementation of the system shown in figs. 11 - 13 can reduce the use of sulphuric acid, significantly and increase the capacity of the cleaning system significantly compared to traditional systems. When the acid cleaning this way is performed outside the manure removal ducts, the acids impacts on the manure removal ducts are avoided and the slurry/manure does not contain acidic waste products, as well as a larger amount of ammonia is kept in the manure for use in fertilizer purposes. When the air is cleaned in the air cleaning plant 64, the cleaned air is let out via the chimney 65, as indicated by the arrows P_{ud} in fig. 13b. The air cleaning plant 64 can also be situated in connection with a common outlet duct, such as shown in fig. 2 and 9. Depending on where the cleaning plant 64 is located the second duct 23b is arranged with its pointed end in one or the other direction.

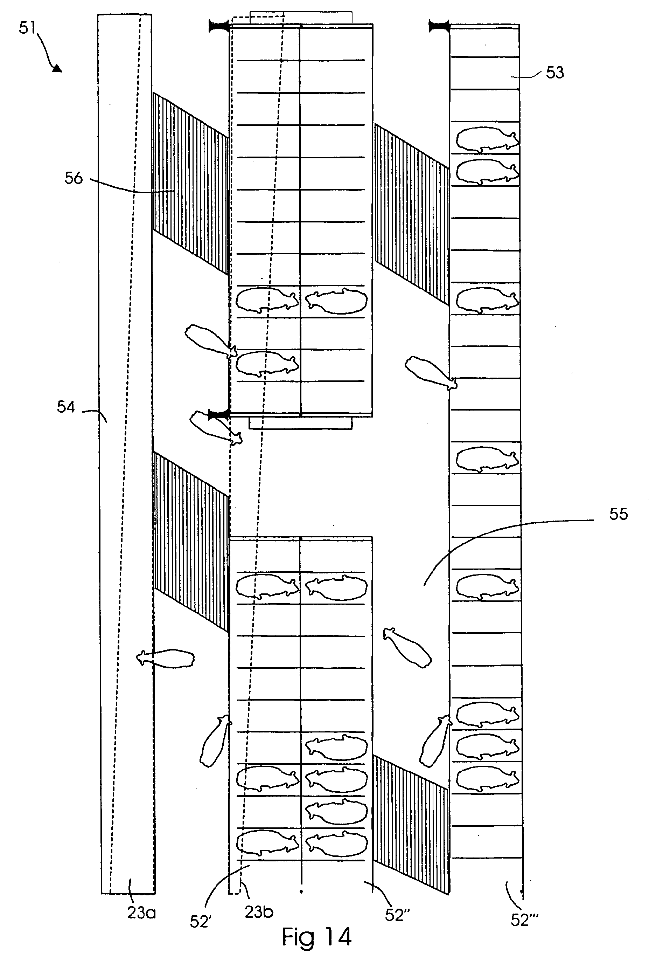

Fig. 14 shows an alternative configuration of the ventilation duct system shown in fig. 11. The ventilation duct system differs in that the second air duct 23b is arranged with its pointed end in the opposite direction compared to the configuration shown in fig. 11, which for example can be beneficial if the contaminated air is to be led to a common outlet duct placed centrally in the stable arrangement, as shown in figs. 2 and 9.

**Table 1**

| **Concept of stable arrangement** | **Relocation of animal measured in m** | **% compared to traditional distance of transport** |
|---|---|---|
| **Traditional stable:** | | |
| Pregnancy stable to farrow stable: | 74,45 m | |
| Farrow stable to piglet stable: | 89,04 m | |
| Farrow stable to loose stable: | 49,27 m | |
| Loose stable to pregnancy stable: | 46,33 m | |

| **MTH Concept 2:** | | |
|---|---|---|
| **Stable arranged with piglet stable** | | |
| Gestation stable to farrow stable: | 46 m | 38% |
| Farrow stable to young pig stable: | 63,1 m | 29% |
| Farrow stable to loose stable: | 65,53 m | -33% |
| Loose stable to pregnancy stable: | 73,75 m | -59% |

| **MTH Concept 3:** | | |
|---|---|---|
| **Stable arranged with piglet and pregnancy stable** | | |
| Pregnancy stable to farrow stable: | 52,07 m | 30% |
| Farrow stable to piglet stable: | 63,2 m | 29% |
| Farrow stable to loose stable: | 51,2 m | -4% |
| Loose **stable** to pregnancy stable: | 34,63 m | 25% |

| **MTH Concept 4:** | | |
|---|---|---|
| **Stable arranged with piglet and pregnancy stable, center walking area in farrow stable and piglet stable + shifted 11 m:** | | |
| Pregnancy stable to farrow stable: | 51,7 m | 31% |
| Farrow stable to piglet stable: | 43,1 m | 52% |
| Farrow stable to loose stable: | 55,9 m | -13% |
| Loose stable to pregnancy stable: | 34,6 m | 25% |

In the above table 1 is shown data from four different pig stables with different interior arrangement, and there from resulting different requirements to the logistic.

The first column indicates the concept of the stable. Second column indicates how long a pig's average transport path is between two stable sections, and in column three is indicated the percentage reduction by choosing a given stable arrangement compared to a traditional stable arrangement (as described in second row of table 1).

The largest reduction in the average accumulated distance of transport is seen for concept 4. Here is seen a reduction on 31% in case of transport between a gestation stable and a farrow stable, and a 52% reduction in case of relocation between a farrow stable and piglet stable, and a reduction of 25% in case of relocation from loose stable to pregnancy stable. On the other hand an increase of 13% is seen in case of relocation from farrow stable to loose stable. Even if a single one of the transport paths have become longer there is an accumulated reduction of 24% compared to a traditional stable with a traditional design. The reductions are achieved by placing the stable sections advantageously relatively to each other and by introducing center walking areas extending across the needed walking areas present to ensure the basic possibility for moving around in the stable. Such cross walking areas furthermore have the advantage to be increase fire safety in the stable arrangement, as the average escape route becomes shortened, as well as more possible emergency exits from the building are present. A large part of the shortening of the transport paths is also achieved by splitting up the piglet stable section and the pregnancy stable section in two, so that a piglet stable section can be arranged on each side of the farrow stable section, and a pregnancy stable section can be arranged on each side of the loose stable section.

To be able to decrease the transport path for the piglets this much is on it own an advantage as the production loss due to transport of especially piglets is especially large.

Optionally a variety of equipment, as the above-described filter elements, can be placed in the ducts for cleaning the air in order for the air to comply with existing requirements to both the incoming and outlet air.

The manure removal ducts are kept clean by traditional means e.g. via automatic, mechanic scraping means and possibly flushing means. Conventionally "pill and release" system is used. Every time a sow is moved and the area is emptied it will be cleaned which most often will be performed manually. I.e. it will be washed down and disinfected, and in relation to this the air holes will also be cleaned. I.e. a regular maintenance of the ventilation duct system is performed avoiding a drop of the system's capacity over time due to dirt deposits.

The air hole can optionally be shielded to avoid clogging, but in an ideal embodiment this is not necessary.

## Claims

1. A method for exchanging at least a part of the air in at least a part of a building having an inner room and a floor, the method comprises the steps of
- supplying a first amount of air from a first station outside the building to the inner room of the building or to a space in communication with the inner room of the building via at least one first duct (23a) extending below the floor of the building and configured with a number of spaced apart first holes (30) in the longitudinal direction and
- leading a second amount of air out of the inner room of the building or out of a space in communication with the inner room of the building to a second station outside the building via at least one second duct (23b) extending below the floor of the building and configured with a number of spaced apart second holes (31) in the longitudinal direction,
**characterised in that**
the cross section of the first duct (23a) is reduced in the direction from the first end of the first duct (23a) towards the second end of the first duct (23a), and/or the cross section of the second duct (23b) is reduced in the direction from the first end of the second duct (23b) towards the second end of the second duct (23b).

2. A method according to claim 1, **characterised in that** the method comprises the step of leading the second amount of air out of the inner room of the building or out of a space in communication with the inner room of the building to a second station outside the building via one or more intermediate stations.

3. A method according to claim 1 or 2, **characterised in that** the building is arranged for animal husbandry, preferably the building is a stable for pig production, cattle production, sheep production, or chicken production.

4. A method according to claim 1, 2 or 3, **characterised in that** the air exchange occurs continuously, at regular intervals or during a fixed period of time, optionally during a user defined time interval.

5. A method according to any of the preceding claims 1 - 4, **characterised in that** the air, which is to be exchanged, has a content of at least one gaseous or particulate contaminant.

6. A method according to any of the preceding claims 1 - 5, **characterised in that** the air, which via the first duct (23a) is led to the inner room or to the space in communication with the inner room of the building, has a content of an additive, the additive being selected from the group comprising means for binding dust in the inner room, ozone, air borne or air soluble medicaments, air purification means, and odorants.

7. A method according to any of the preceding claims 1 - 6, **characterised in that** the air, which via the second duct (23b) is led out of the inner room or of the space in communication with the inner room of the building, is admixed an additive, preferably an ammonia precipitation agent, and/or is filtered.

8. A method according to any of the preceding claims 1 - 7, **characterised in that** the first and/or second amount of air are led to and out of the inner room or of the space in communication with the inner room of the building by means of pumping means or suction means (28).

9. A method according to any of the preceding claims 1 - 8, **characterised in that** the first and/or second amount of air constitute a subamount of the total volume of air of the inner room.

10. A method according to any of the preceding claims 1 - 9, **characterised in that** the air, which is led to the inner room or the space in communication with the inner room, is temperature controlled.

11. A method according to any of the preceding claims 1 - 10, **characterised in that** the flow of the first amount of air through the first duct (23a) and the flow of the second amount of air through the second duct (23b) creates an air flow crosswise a manure removal duct (22,60) inserted between the first duct (23a) and the second duct (23b).

12. A stable section (2,3,45,46,51) in the form of a building having an inner room and a floor, **characterised in that** the stable section (2,3,45,46,51) comprises
- a first station arranged outside the stable section (2,3,45,46,51) for leading a first amount of air into an inner room of the stable section or into a space in communication with the inner room of the building via at least via one first duct extending below the floor of the building (23a) and configured with a number of spaced apart first holes (30) in the longitudinal direction and
- at least one second duct(23b) extending below the floor of the stable section (2,3,45,46,51) and configured with a number of spaced apart second holes (31) in the longitudinal direction, for leading a second amount of air out of the inner room of the stable section or out of a space in communication with the inner room of the building to a second station outside the stable section,
**characterised in that**
- the cross section of the first duct (23a) is reduced in the direction from the first end of the first duct (23a) towards the second end of the first duct (23a), and/or
- the cross section of the second duct (23b) is reduced in the direction from the first end of the second duct (23b) towards the second end of the second duct (23b).

13. A stable section (2,3,45,46,51) according to claim 12, **characterised in that** the second amount of air is led out of the inner room of the stable section or out of a space in communication with the inner room to a second station outside the stable section via one or more intermediate stations.

14. A stable section (2,3,45,46,51) according to claim 12 or 13, **characterised in that** the first amount of air is led into the inner room of the stable section or into the space in communication with the inner room and/or the second amount of air is led out of the inner room of the stable section or out the space in communication with the inner room via filter elements (61).

15. A stable section (2,3,45,46,51) according to claim 12, **characterised in that** the filter elements (61) is arranged in the circumferential wall of the building.

16. A stable section (2,3,45,46,51) according to any of the preceding claims 12 - 15, **characterised in that** the stable section (2,3,45,46,51) comprises a number of manure removal ducts (22,60) extending substantially parallel to at least the first and/or the second duct (23a,23b), and wherein the first and second holes (30,31) in the at least one first and second duct (23a,23b), respectively, are arranged in fluid communication with the manure removal duct (22,60).

17. A stable section (2,3,45,46,51) according to claim 16, **characterised in that** the manure removal ducts (22,60) and first and/or second duct (23a,23b) have a common wall, or that the manure removal ducts (22,60) and/or the first duct and/or second duct (23a,23b) are arranged at a distance from each other.

18. A stable section (2,3,45,46,51) according to claims 16 or 17, **characterised in that** the manure removal ducts (22,60) and/or the first duct and/or second duct (23a,23b) are in fluid communication via pipes extending between the first and/or second holes (30,31) and the manure removal ducts (22,60).

19. A stable section (2,3,45,46,51) according to any of the preceding claims 16 - 18, **characterised in that** the manure removal ducts (22,60) and an associated first duct or second duct (23a,23b) are dimensioned and arranged in relation to each other to prevent solid waste from the stable section from entering the first and/or second duct (23a,23b).

20. A stable section (2,3,45,46,51) according to any of the preceding claims 12 - 19, **characterised in that** the air that is to be exchanged in the inner room of the stable section (2,3,45,46,51) or in the space in communication with the inner room, has a content of at least one gaseous contaminant, such as ammonia, and/or at least one particulate contaminant, such as dust.

21. A stable section (2,3,45,46,51) according to any of the preceding claims 12 - 20, **characterised in that** the air, which via the first duct (23a) is led to the inner room or to the space in communication with the inner room of the building, has a content of an additive, optionally selected from the group comprising means for binding dust in the air in the inner room or in the space in communication with the inner room of the building, ozone, air borne or air soluble medicaments, air purification means, and/or odorants.

22. A stable section (2,3,45,46,51) according to any of the preceding claims 12 - 21, **characterised in that** the first and/or second amount of air is led to and from the stable sections inner room or the space in communication with the inner room of the building, respectively, by means of pumping means, suction means or blowing means (28) optionally by controlling motor-controlled dampers.

23. A stable section (2,3,45,46,51) according to any of the preceding claims 12 - 22, **characterised in that** the first and/or second amount of air constitute a subamount of the total volume of air of the inner room.

24. A stable section (2,3,45,46,51) according to any of the preceding claims 12 - 23, **characterised in that** the air, which is led to the inner room or the space in communication with the inner room, is temperature controlled.

25. A stable section (2,3,45,46,51) according to any of the preceding claims 12 - 24, **characterised in that** at least one of the holes (30,31) of the first and/or second duct (23a,23b) extend oblique through the wall of the respective duct in the flow direction of the flowing air, and/or oblique in direction towards the floor.

26. A stable section (2,3,45,46,51) according to any of the preceding claims 12 - 25, **characterised in that** a stable section (2,3,45,46,51) is divided into subsections separated by walking areas (16,55',55") and/or walls, and that said subsections are placed in relation to each other so that a breeding animal's total distance of transport is shortest possible measured during a cycle from insemination to insemination.

27. A stable section (2,3,45,46,51) according to any of the preceding claims 12 - 26, **characterised in that** the flow of the first amount of air through the first duct (23a) and the flow of the second amount of air through the second duct (23b) creates an air flow crosswise a manure removal duct (22,60) inserted between the first duct (23a) and the second duct (23b).

28. A stable arrangement (1,44) comprising at least two stable sections (2,3,45,46,51) according to any of the preceding claims 12 - 18 arranged at a distance from each other, and wherein the method according to any of the preceding claims 1 - 11 is used, **characterised in that** the second stations of the at least two stable sections (2,3,45,46,51) are arranged inside or open into the same discharge building (4,25,64), preferably into a discharge tower having an upward discharge end, and wherein the at least two stable sections (2,3,45,46,51) are arranged substantially symmetrical about the same discharge building (4,25,64).

29. A stable arrangement (1,44) according to claim 28, **characterised in that** the stable arrangement (1) comprises at least a stable section (2,3,45,46,51) arranged for different stages of animal husbandry and preferably selected from the group comprising stable sections (2,3,45,46,51) arranged for pregnant animals, a stable section (2,3,45,46,51) for small animals, a stable section (2,3,45,46,51) for rearing, a maternity section, such as a farrow section, a calve section, a foal section, and/or a lamb section, a stable section (2,3,45,46,51) for insemination and/or a stable section (2,3,45,46,51) for arbitrary isolating animals.

30. A ventilating duct system (23) for exchanging at least a part of the air in at least a part of a building having an inner room and a floor, wherein the ventilating duct system (23) comprises
- a first duct extending below the floor of the building and configured with a number of spaced apart first holes (30) in the longitudinal direction,
- a second duct extending below the floor of the building and configured with a number of spaced apart second holes (31) in the longitudinal direction,
- first means for via a first end of the first duct sucking, pumping or blowing a first amount of air into inner room of the building or into a space in communication with the inner room of the building through the first holes (30), and
- second means for via a first end of the second duct sucking, pumping or blowing a second amount of air from the inner room of the building or from a space in communication with the inner room of the building through the second holes (31), and wherein the first means and the second means are identical or different, **characterised in that**
- the cross section of the first duct (23a) is reduced in the direction from the first end of the first duct (23a) towards the second end of the first duct (23a), and/or
- the cross section of the second duct (23b) is reduced in the direction from the first end of the second duct (23b) towards the second end of the second duct (23b),
- the first end of the first duct (23a) faces the second duct's (23b) second end or against the second duct's (23b) first end, wherein
- a first duct (23a) and a second duct (23b) is arranged at a distance from each other or has a common wall.

31. A ventilating duct system (23) according to claim 30, **characterised in that** the first holes (30) and/or the second holes (31) is formed in the side or in the area of the first duct (23a) and/or the second duct (23b), respectively, facing towards the inner room or towards the space in communication with the inner room of the building.

32. A ventilating duct system (23) according to claim 30 or 31, **characterised in that** the space in communication with inner room of the building is a manure removal duct (22,60).

33. A ventilating duct system (23) according to claim 30, 31 or 32, **characterised in that** the flow of the first amount of air through the first duct (23a) and the flow of the second amount of air through the second duct (23b) creates an air flow crosswise a manure removal duct (22,60) inserted between the first duct (23a) and the second duct (23b).

34. A ventilating duct system (23) according to claim 33, **characterised in that** air flow crosswise the manure removal duct (22,60) has a velocity of between 0.1 - 0.8 m/s, preferably between 0.3 - 0.5 m/s.

35. A ventilating duct system (23) according to claim 33, **characterised in that** the angle between the common wall (34,36) and a longitudinal flow axis of a duct (23a,23b) is constant along the entire length of the duct (23a,23b).

36. A ventilating duct system (23) according to any of the preceding claims 30- 35, **characterised in that** the angle between two opposite walls of a duct (23a,23b) is less than 90°, preferably less than 60°, and more preferred less than 45° along the total length of the duct (23a,23b).

37. A ventilating duct system (23) according to any of the preceding claims 30 - 36, **characterised in that** the cross section of the first and/or the second duct (23a,23b) has an annular circumference, which is at least partly circular, oval, elliptic, quadratic, rectangular or polygonic.

38. A ventilating duct system (23) according to any of the preceding claims 30 - 37, **characterised in that** at least one of the first duct (23a) or the second duct (23b) are constructed of a number of series connected duct sections (23'), and preferably are both constructed of series connected duct sections (23').

39. Use of the ventilating duct system (23) according to any of the preceding claims 30 - 38 in the method according to any of the preceding claims 1 - 11 in a stable section according to any of the preceding claims 12 - 27 and/or a stable arrangement according to any of the preceding claims 28 - 29 for optimizing a breeding animal's total distance of transport, measured during a cycle from insemination to insemination so that transport distance, is the shortest possible.

40. A system for planning, arranging and/or operating a stable section (2,3,45,46) according to any of the preceding claims 12 - 27 and/or a stable arrangement (1) according to any of the preceding claims 28 - 29, **characterised in that** the system comprises providing a stable section (2,3,45,46) and/or a stable arrangement(1), which is divided into subsection separated by walking areas (16) and/or walls, wherein said subsections are placed in relation to each other in a manner that ensures that a breeding animal's total distance of transport is the shortest possible measured during a cycle from insemination to insemination, and that the system comprises computer means programmed for logistically optimizing the planning, the arrangement and/or the operation.

## Patentansprüche

1. Verfahren zum Austausch wenigstens eines Teils der Luft in wenigstens einem Teil eines Gebäudes mit einem Innenraum und einem Boden, wobei das Verfahren die folgenden Schritte aufweist:
- Zuführen einer ersten Luftmenge von einer ersten Station außerhalb des Gebäudes zu dem Innenraum des Gebäudes oder zu einem Raum in Verbindung mit dem Innenraum des Gebäudes über wenigstens eine erste Leitung (23a), die sich unter dem Boden des Gebäudes erstreckt und aufgebaut ist mit einer Anzahl von beabstandeten ersten Löchern (30) in der Längsrichtung, und
- Leiten einer zweiten Luftmenge aus dem Innenraum des Gebäudes oder aus einem Raum in Verbindung mit dem Innenraum des Gebäudes zu einer zweiten Station außerhalb des Gebäudes über wenigstens eine zweite Leitung (23b), die sich unter dem Boden des Gebäudes erstreckt und aufgebaut ist mit einer Anzahl von beabstandeten zweiten Löchern (31) in der Längsrichtung,
**dadurch gekennzeichnet, dass**
der Querschnitt der ersten Leitung (23a) in der Richtung von dem ersten Ende der ersten Leitung (23a) zu dem zweiten Ende der ersten Leitung (23a) verringert ist und/oder der Querschnitt der zweiten Leitung (23b) in Richtung von dem ersten Ende der zweiten Leitung (23b) zu dem zweiten Ende der zweiten Leitung (23b) verringert ist.

2. Verfahren nach Anspruch 1, **dadurch gekennzeichnet, dass** das Verfahren den Schritt des Leitens der zweiten Luftmenge aus dem Innenraum des Gebäudes oder aus einem Raum in Verbindung mit dem Innenraum des Gebäudes zu einer zweiten Station außerhalb des Gebäudes über eine oder mehrere Zwischenstationen umfasst.

3. Verfahren nach Anspruch 1 oder 2, **dadurch gekennzeichnet, dass** das Gebäude für eine Tierhaltung ausgebildet ist, das Gebäude vorzugsweise ein Stall für die Schweineproduktion, die Rinderproduktion, die Schafproduktion oder die Hühnerproduktion ist.

4. Verfahren nach Anspruch 1, 2 oder 3, **dadurch gekennzeichnet, dass** der Luftaustausch kontinuierlich, in regelmäßigen Intervallen oder während einer festgelegten Zeitdauer, optional während einer von einem Benutzer festgelegten Zeitdauer, geschieht.

5. Verfahren nach einem der vorhergehenden Ansprüche 1 - 4, **dadurch gekennzeichnet, dass** die Luft, die ausgetauscht werden soll, einen Gehalt von wenigstens einer gasförmigen oder partikelförmigen Verschmutzung hat.

6. Verfahren nach einem der vorhergehenden Ansprüche 1 - 5, **dadurch gekennzeichnet, dass** die Luft, die über die erste Leitung (23a) zu dem Innenraum oder zu dem Raum in Verbindung mit dem Innenraum des Gebäudes geleitet wird, einen Gehalt eines Zusatzes hat, wobei der Zusatz ausgewählt ist aus der Gruppe umfassend Mittel zum Binden von Staub in dem Innenraum, Ozon, in der Luft schwebende oder lösliche Medikamente, Luftreinigungsmittel und Geruchsstoffe.

7. Verfahren nach einem der vorhergehenden Ansprüche 1 - 6, **dadurch gekennzeichnet, dass** der Luft, die über die zweite Leitung (23b) aus dem Innenraum oder dem Raum in Verbindung mit dem Innenraum des Gebäudes geleitet wird, ein Zusatzstoff zugemischt wird, vorzugsweise ein Ammoniakfällungsmittel, und/oder dass die Luft gefiltert wird.

8. Verfahren nach einem der vorhergehenden Ansprüche 1 - 7, **dadurch gekennzeichnet, dass** die erste und/oder zweite Luftmenge zu und aus dem Innenraum oder dem Raum in Verbindung mit dem Innenraum des Gebäudes mittels Pumpmitteln oder Saugmitteln (28) geleitet werden.

9. Verfahren nach einem der vorhergehenden Ansprüche 1 - 8, **dadurch gekennzeichnet, dass** die erste und/oder zweite Luftmenge eine Untermenge des Gesamtluftvolumens des Innenraums bilden.

10. Verfahren nach einem der vorhergehenden Ansprüche 1 - 9, **dadurch gekennzeichnet, dass** die Luft, die zu dem Innenraum oder dem Raum in Verbindung mit dem Innenraum geleitet wird, temperaturgesteuert wird.

11. Verfahren nach einem der vorhergehenden Ansprüche 1 - 10, **dadurch gekennzeichnet, dass** der Strom der ersten Luftmenge durch die erste Leitung (23a) und der Strom der zweiten Luftmenge durch die zweite Leitung (23b) einen Luftstrom quer zu einer Gülleabführleitung (22, 60) erzeugen, die zwischen der ersten Leitung (23a) und der zweiten Leitung (23b) eingesetzt ist.

12. Stallabschnitt (2, 3, 45, 46, 51) in Form eines Gebäudes mit einem Innenraum und einem Boden, **dadurch gekennzeichnet, dass** der Stallabschnitt (2, 3, 45, 46, 51)
- eine erste Station angeordnet außerhalb des Stallabschnitts (2, 3, 45, 46, 51) zum Leiten einer ersten Luftmenge in einen Innenraum des Stallabschnitts oder in einen Raum in Verbindung mit dem Innenraum des Gebäudes über wenigstens eine erste Leitung (23a), die sich unter dem Boden des Gebäudes erstreckt und mit einer Anzahl von beabstandeten ersten Löchern (30) in der Längsrichtung aufgebaut ist, und
- wenigstens eine zweite Leitung (23b), die sich unter dem Boden des Stallabschnitts (2, 3, 45, 46, 51) erstreckt und mit einer Anzahl von beabstandeten zweiten Löchern (31) in der Längsrichtung aufgebaut ist, um eine zweite Luftmenge aus dem Innenraum des Stallabschnitts oder aus einem Raum in Verbindung mit dem Innenraum des Gebäudes zu einer zweiten Station außerhalb des Stallabschnitts zu leiten, aufweist,
**dadurch gekennzeichnet, dass**
- der Querschnitt der ersten Leitung (23a) in der Richtung von dem ersten Ende der ersten Leitung (23a) zu dem zweiten Ende der ersten Leitung (23a) verringert ist und/oder
- der Querschnitt der zweiten Leitung (23b) in der Richtung von dem ersten Ende der zweiten Leitung (23b) zu dem zweiten Ende der zweiten Leitung (23b) verringert ist.

13. Stallabschnitt (2, 3, 45, 46, 51) nach Anspruch 12, **dadurch gekennzeichnet, dass** die zweite Luftmenge aus dem Innenraum des Stallabschnitts oder aus einem Raum in Verbindung mit dem Innenraum zu einer zweiten Station außerhalb des Stallabschnitts über eine oder mehrere Zwischenstationen geleitet wird.

14. Stallabschnitt (2, 3, 45, 46, 51) nach Anspruch 12 oder 13, **dadurch gekennzeichnet, dass** die erste Luftmenge in den Innenraum des Stallabschnitts oder in den Raum in Verbindung mit dem Innenraum und/oder die zweite Luftmenge aus dem Innenraum des Stallabschnitts oder aus dem Raum in Verbindung mit dem Innenraum über Filterelemente (61) geleitet wird.

15. Stallabschnitt (2, 3, 45, 46, 51) nach Anspruch 12, **dadurch gekennzeichnet, dass** die Filterelemente (61) in der Umfangswand des Gebäudes angeordnet sind.

16. Stallabschnitt (2, 3, 45, 46, 51) nach einem der vorhergehenden Ansprüche 12 - 15, **dadurch gekennzeichnet, dass** der Stallabschnitt (2, 3, 45, 46, 51) eine Anzahl von Gülleabführleitungen (22, 60) aufweist, die sich im Wesentlichen parallel zu wenigstens der ersten und/oder der zweiten Leitung (23a, 23b) erstrecken, und wobei die ersten und zweiten Löcher (30, 31) in der wenigstens einen ersten bzw. zweiten Leitung (23a, 23b) in Strömungsverbindung mit der Gülleabführleitung (22, 60) angeordnet sind.

17. Stallabschnitt (2, 3, 45, 46, 51) nach Anspruch 16, **dadurch gekennzeichnet, dass** die Gülleabführleitungen (22, 60) und die erste und/oder zweite Leitung (23a, 23b) eine gemeinsame Wandung haben oder dass die Gülleabführleitungen (22, 60) und/oder die erste Leitung und/oder die zweite Leitung (23a, 23b) in einem Abstand voneinander angeordnet sind.

18. Stallabschnitt (2, 3, 45, 46, 51) nach den Ansprüchen 16 oder 17, **dadurch gekennzeichnet, dass** die Gülleabführleitungen (22, 60) und/oder die erste Leitung und/oder die zweite Leitung (23a, 23b) in Strömungsverbindung über Rohre sind, die sich zwischen den ersten und/oder zweiten Löchern (30, 31) und den Gülleabführleitungen (22, 60) erstrecken.

19. Stallabschnitt (2, 3, 45, 46, 51) nach einem der vorhergehenden Ansprüche 16 - 18, **dadurch gekennzeichnet, dass** die Gülleabführleitungen (22, 60) und eine zugeordnete erste Leitung oder zweite Leitung (23a, 23b) bemessen und angeordnet in Bezug zueinander sind, um festen Schmutz aus dem Stallabschnitt daran zu hindern, in die erste und/oder die zweite Leitung (23a, 23b) einzutreten.

20. Stallabschnitt (2, 3, 45, 46, 51) nach einem der vorhergehenden Ansprüche 12 - 19, **dadurch gekennzeichnet, dass** die Luft, die in dem Innenraum des Stallabschnitts (2, 3, 45, 46, 51) oder in dem Raum in Verbindung mit dem Innenraum ausgetauscht werden soll, einen Gehalt von wenigstens einer gasförmigen Verschmutzung, wie beispielsweise Ammoniak, und/oder wenigstens eine partikelförmige Verschmutzung, wie beispielsweise Staub, aufweist.

21. Stallabschnitt (2, 3, 45, 46, 51) nach einem der vorhergehenden Ansprüche 12 - 20, **dadurch gekennzeichnet, dass** die Luft, die über die erste Leitung (23a) zu dem Innenraum oder dem Raum in Verbindung mit dem Innenraum des Gebäudes geleitet wird, einen Gehalt eines Zusatzes, optional ausgewählt aus der Gruppe umfassend Mittel zum Binden von Staub in der Luft in dem Innenraum oder in dem Raum in Verbindung mit dem Innenraum des Gebäudes, Ozon, in der Luft schwebende oder lösliche Medikamente, Luftreinigungsmittel und/oder Geruchsstoffe, aufweist.

22. Stallabschnitt (2, 3, 45, 46, 51) nach einem der vorhergehenden Ansprüche 12 - 21, **dadurch gekennzeichnet, dass** die erste und/oder zweite Luftmenge zu und von dem Innenraum des Stallabschnitts oder dem Raum in Verbindung mit dem Innenraum des Gebäudes durch Pumpmittel, Saugmittel oder Blasmittel (28) geleitet wird, optional durch Steuern von motorgesteuerten Klappen.

23. Stallabschnitt (2, 3, 45, 46, 51) nach einem der vorhergehenden Ansprüche 12 - 22, **dadurch gekennzeichnet, dass** die erste und/oder zweite Luftmenge eine Untermenge des Gesamtluftvolumens in dem Innenraum bildet.

24. Stallabschnitt (2, 3, 45, 46, 51) nach einem der vorhergehenden Ansprüche 12 - 23, **dadurch gekennzeichnet, dass** die Luft, die zu dem Innenraum oder dem Raum in Verbindung mit dem Innenraum geleitet wird, temperaturgesteuert wird.

25. Stallabschnitt (2, 3, 45, 46, 51) nach einem der vorhergehenden Ansprüche 12 - 24, **dadurch gekennzeichnet, dass** die wenigstens eines der Löcher (30, 31) der ersten und/oder zweiten Leitung (23a, 23b) sich schräg durch die Wandung der entsprechenden Leitung in der Strömungsrichtung der strömenden Luft und/oder schräg in Richtung zu dem Boden erstreckt.

26. Stallabschnitt (2, 3, 45, 46, 51) nach einem der vorhergehenden Ansprüche 12 - 25, **dadurch gekennzeichnet, dass** ein Stallabschnitt (2, 3, 45, 46, 51) in Unterabschnitte unterteilt ist, die durch Gehbereiche (16, 55', 55 ") und/oder Wände getrennt sind, und dass die Unterabschnitte in Relation zueinander so angeordnet sind, dass ein Gesamttransportabstand eines Zuchttiers gemessen während eines Zyklus von Insemination zu Insemination so kurz wie möglich ist.

27. Stallabschnitt (2, 3, 45, 46, 51) nach einem der vorhergehenden Ansprüche 12 - 26, **dadurch gekennzeichnet, dass** der Strom der ersten Luftmenge durch die erste Leitung (23a) und der Strom der zweiten Luftmenge durch die zweite Leitung (23b) einen Luftstrom quer zu einer Gülleabführleitung (22, 60) erzeugt, die zwischen der ersten Leitung (23a) und der zweiten Leitung (23b) eingesetzt ist.

28. Stallanordnung (1, 44) mit wenigstens zwei Stallabschnitten (2, 3, 45, 46, 51) nach einem der vorhergehenden Ansprüche 12 - 18, die in einem Abstand voneinander angeordnet sind, und wobei das Verfahren nach einem der vorgehenden Ansprüche 1 - 11 verwendet wird, **dadurch gekennzeichnet, dass** die zweiten Stationen der wenigstens zwei Stallabschnitte (2, 3, 45, 46, 51) innerhalb desselben Entleerungsgebäudes (4, 25, 64) angeordnet sind oder sich in dieses öffnen, vorzugsweise in einen Entleerungsturm mit einem nach oben weisenden Entleerungsende, und wobei die wenigstens zwei Stallabschnitte (2, 3, 45, 46, 51) im Wesentlichen symmetrisch um dasselbe Entleerungsgebäude (4, 25, 64) angeordnet sind.

29. Stallanordnung (1, 44) nach Anspruch 28, **dadurch gekennzeichnet, dass** die Stallanordnung (1) wenigstens einen Stallabschnitt (2, 3, 45, 46, 51) umfasst, der für unterschiedliche Stufen einer Tierhaltung angeordnet ist und vorzugsweise aus der Gruppe ausgewählt ist umfassend Stallabschnitte (2, 3, 45, 46, 51) angeordnet für schwangere Tiere, einen Stallabschnitt (2, 3, 45, 46, 51) für kleine Tiere, einen Stallabschnitt (2, 3, 45, 46, 51) für die Zucht, einen Muttertierabschnitt, wie beispielsweise einen Ferkelabschnitt, einen Kälberabschnitt, einen Fohlenabschnitt und/oder einen Lämmerabschnitt, einen Stallabschnitt (2, 3, 45, 46, 51) für Insemination und/oder einen Stallabschnitt (2, 3, 45, 46, 51) für beliebig isolierte Tiere.

30. Belüftungsleitungssystem (23) zum Austauschen von wenigstens einem Teil der Luft in wenigstens einem Teil eines Gebäudes mit einem Innenraum und einem Boden, wobei das Belüftungsleitungssystem (23)
- eine erste Leitung, die sich unter dem Boden des Gebäudes erstreckt und mit einer Anzahl von beabstandeten ersten Löchern (30) in der Längsrichtung aufgebaut ist,
- eine zweite Leitung, die sich unter dem Boden des Gebäudes erstreckt und mit einer Anzahl von beabstandeten zweiten Löchern (31) in der Längsrichtung aufgebaut ist,
- erste Mittel, um über ein erstes Ende der ersten Leitung eine erste Luftmenge in den Innenraum des Gebäudes oder in einen Raum in Verbindung mit dem Innenraum des Gebäudes durch die ersten Löcher (30) zu saugen, zu pumpen oder zu blasen, und
- zweite Mittel, um über ein erstes Ende der zweiten Leitung eine zweite Luftmenge aus dem Innenraum des Gebäudes oder aus einem Raum in Verbindung mit dem Innenraum des Gebäudes durch die zweiten Löcher (31) zu saugen, zum pumpen oder zu blasen, aufweist, und wobei die ersten Mittel und die zweiten Mittel identisch oder unterschiedlich sind,
**dadurch gekennzeichnet, dass**
- der Querschnitt der ersten Leitung (23a) in der Richtung von dem ersten Ende der ersten Leitung (23a) zu dem zweiten Ende der ersten Leitung (23a) verringert ist und/oder
- der Querschnitt der zweiten Leitung (23b) in der Richtung von dem ersten Ende der zweiten Leitung (23b) zu dem zweiten Ende der zweiten Leitung (23b) verringert ist,
- das erste Ende der ersten Leitung (23a) zu dem zweiten Ende der zweiten Leitung (23b) oder gegen das erste Ende der zweiten Leitung (23b) weist, wobei
- eine erste Leitung (23a) und eine zweite Leitung (23b) in einem Abstand voneinander angeordnet sind oder eine gemeinsame Wandung haben.

31. Belüftungsleitungssystem (23) nach Anspruch 30, **dadurch gekennzeichnet, dass** die ersten Löcher (30) und/oder die zweiten Löcher (31) in der Seite oder in dem Bereich der ersten Leitung (23a) und/oder der zweiten Leitung (23b) ausgebildet sind, die zu dem Innenraum oder zu dem Raum in Verbindung mit dem Innenraum des Gebäudes weisen.

32. Belüftungsleitungssystem (23) nach Anspruch 30 oder 31, **dadurch gekennzeichnet, dass** der Raum in Verbindung mit dem Innenraum des Gebäudes eine Gülleabführleitung (22, 60) ist.

33. Belüftungsleitungssystem (23) nach Anspruch 30, 31 oder 32, **dadurch gekennzeichnet, dass** der Strom der ersten Luftmenge durch die erste Leitung (23a) und der Strom der zweiten Luftmenge durch die zweite Leitung (23b) einen Luftstrom quer zu einer Gülleabführleitung (22, 60) erzeugen, die zwischen der ersten Leitung (23a) und der zweiten Leitung (23b) eingesetzt ist.

34. Lüftungsleitungssystem (23) nach Anspruch 33, **dadurch gekennzeichnet, dass** der Luftstrom quer zu der Gülleabführleitung (22, 60) eine Geschwindigkeit zwischen 0,1 - 0,8 m/s, vorzugsweise zwischen 0,3 - 0,5 m/s, hat.

35. Lüftungsleitungssystem (23) nach Anspruch 33, **dadurch gekennzeichnet, dass** der Winkel zwischen der gemeinsamen Wandung (34, 36) und einer Strömungsachse in Längsrichtung einer Leitung (23a, 23b) konstant entlang der gesamten Länge der Leitung (23a, 23b) ist.

36. Lüftungsleitungssystem (23) nach einem der vorhergehenden Ansprüche 30 - 35, **dadurch gekennzeichnet, dass** der Winkel zwischen zwei gegenüberliegenden Wandungen einer Leitung (23a, 23b) kleiner als 90°, vorzugsweise kleiner als 60°, und besonders bevorzugt kleiner als 45°, entlang der gesamten Länge der Leitung (23a, 23b) ist.

37. Lüftungsleitungssystem (23) nach einem der vorhergehenden Ansprüche 30 - 36, **dadurch gekennzeichnet, dass** der Querschnitt der ersten und/oder zweiten Leitung (23a, 23b) einen ringförmigen Umfang hat, der wenigstens teilweise kreisförmig, oval, elliptisch, quadratisch, rechteckig oder polygonal ist.

38. Lüftungsleitungssystem (23) nach einem der vorhergehenden Ansprüche 30 - 37, **dadurch gekennzeichnet, dass** wenigstens eine der ersten Leitung (23a) oder der zweiten Leitung (23b) aus einer Anzahl von in Reihe miteinander verbundenen Leitungsabschnitten (23') aufgebaut sind und vorzugsweise beide aus in Reihe miteinander verbundenen Leitungsabschnitten (23') aufgebaut sind.

39. Verwendung eines Lüftungsleitungssystems (23) nach einem der vorhergehenden Ansprüche 30 - 38 in dem Verfahren nach einem der vorhergehenden Ansprüche 1 - 11 in einem Stallabschnitt nach einem der vorhergehenden Ansprüche 12 - 27 und/oder einer Stallanordnung nach einem der vorhergehenden Ansprüche 28 - 29 zum Optimieren eines Gesamttransportabstands eines Zuchttiers gemessen während eines Zyklus von Insemination zu Insemination, so dass dieser Transportabstand so kurz wie möglich ist.

40. System zum Planen, Anordnen und/oder Betreiben eines Stallabschnitts (2, 3, 45, 46) nach einem der vorhergehenden Ansprüche 12 - 27 und/oder einer Stallanordnung (1) nach einem der vorhergehenden Ansprüche 28 - 29, **dadurch gekennzeichnet, dass** das System ein Bereitstellen eines Stallabschnitts (2, 3, 45, 46) und/oder einer Stallanordnung (1) umfasst, die in Unterabschnitte durch Gehbereiche (16) und/oder Wände unterteilt ist, wobei die Unterabschnitte in Relation zueinander in einer Weise angeordnet sind, die sicherstellt, dass ein Gesamttransportabstand eines Zuchttiers so kurz wie möglich ist gemessen während eines Zyklus von Insemination zu Insemination, und dass das System Computermittel umfasst, die programmiert sind, um logistisch die Planung, die Anordnung und/oder den Betrieb zu optimieren.

## Revendications

1. Procédé d'échange d'au moins une partie de l'air dans au moins une partie d'un bâtiment ayant une pièce interne et un plancher, le procédé comprenant les étapes consistant à
- amener une première quantité d'air provenant d'un premier poste à l'extérieur du bâtiment dans la pièce interne du bâtiment ou dans un espace en communication avec la pièce interne du bâtiment via au moins un premier conduit (23a) s'étendant sous le plancher du bâtiment et configuré avec un certain nombre de premiers trous espacés (30) dans la direction longitudinale et
- diriger une seconde quantité d'air hors de la pièce interne du bâtiment ou hors d'un espace en communication avec la pièce interne du bâtiment vers un second poste à l'extérieur du bâtiment via au moins un second conduit (23b) s'étendant sous le plancher du bâtiment et configuré avec un certain nombre de seconds trous espacés (31) dans la direction longitudinale, **caractérisé en ce que**
la section du premier conduit (23a) est réduite dans la direction de la première extrémité du premier conduit (23a) vers la seconde extrémité du premier conduit (23a), et/ou la section du second conduit (23b) est réduite dans la direction de la première extrémité du second conduit (23b) vers la seconde extrémité du second conduit (23b).

2. Procédé selon la revendication 1, **caractérisé en ce que** le procédé comprend l'étape consistant à diriger la seconde quantité d'air hors de la pièce interne du bâtiment ou hors d'un espace en communication avec la pièce interne du bâtiment vers un second poste à l'extérieur du bâtiment via un ou plusieurs postes intermédiaires.

3. Procédé selon la revendication 1 ou 2, **caractérisé en ce que** le bâtiment est agencé pour l'élevage d'animaux, de préférence le bâtiment est une étable pour la production de cochons, la production de bovins, la production d'ovins ou la production de poulets.

4. Procédé selon la revendication 1, 2 ou 3, **caractérisé en ce que** l'échange d'air a lieu de façon continue, à des intervalles réguliers ou pendant une période fixe, facultativement pendant un intervalle temps défini par l'utilisateur.

5. Procédé selon l'une quelconque des revendications précédentes 1 à 4, **caractérisé en ce que** l'air, qui doit être échangé, a une teneur en au moins un contaminant gazeux ou particulaire.

6. Procédé selon l'une quelconque des revendications précédentes 1 à 5, **caractérisé en ce que** l'air, qui est dirigé, via le premier conduit (23a), vers la pièce interne ou l'espace en communication avec la pièce interne du bâtiment, a une teneur en un additif, l'additif étant choisi dans le groupe comprenant un moyen de fixation de la poussière dans la pièce interne, l'ozone, des médicaments en suspension dans l'air ou solubles dans l'air, des moyens de purification de l'air et des agents odorisants.

7. Procédé selon l'une quelconque des revendications précédentes 1 à 6, **caractérisé en ce que** l'air, qui est dirigé, via le second conduit (23b), hors de la pièce interne ou de l'espace en communication avec la pièce interne du bâtiment, est mélangé avec un additif, de préférence un agent de précipitation de l'ammoniac, et/ou est filtré.

8. Procédé selon l'une quelconque des revendications précédentes 1 à 7, **caractérisé en ce que** la première et/ou la seconde quantité d'air sont dirigées vers et hors de la pièce interne ou de l'espace en communication avec la pièce interne du bâtiment au moyen d'un moyen de pompage ou d'un moyen d'aspiration (28).

9. Procédé selon l'une quelconque des revendications précédentes 1 à 8, **caractérisé en ce que** la première et/ou la seconde quantité d'air constituent une sous-quantité du volume total de l'air dans la pièce interne.

10. Procédé selon l'une quelconque des revendications précédentes 1 à 9, **caractérisé en ce que** l'air, qui est dirigé vers la pièce interne ou l'espace en communication avec la pièce interne, est régulé en température.

11. Procédé selon l'une quelconque des revendications précédentes 1 à 10, **caractérisé en ce que** l'écoulement de la première quantité d'air à travers le premier conduit (23a) et l'écoulement de la seconde quantité d'air à travers le second conduit (23b) créent un flux d'air transversal à un conduit d'enlèvement du fumier (22, 60) inséré entre le premier conduit (23a) et le second conduit (23b).

12. Section d'étable (2, 3, 45, 46, 51) sous la forme d'un bâtiment ayant une pièce interne et un plancher, **caractérisée en ce que** la section d'étable (2, 3, 45, 46, 51) comprend
- un premier poste agencé à l'extérieur de la section d'étable (2, 3, 45, 46, 51) afin de diriger une première quantité d'air dans une pièce interne de la section d'étable ou dans un espace en communication avec la pièce interne du bâtiment via au moins un premier conduit (23a) s'étendant sous le plancher du bâtiment et configuré avec un certain nombre de premiers trous espacés (30) dans la direction longitudinale et
- au moins un second conduit (23b) s'étendant sous le plancher de la section d'étable (2, 3, 45, 46, 51) et configuré avec un certain nombre de seconds trous espacés (31) dans la direction longitudinale, pour diriger une seconde quantité d'air hors de la pièce interne de la section d'étable ou hors d'un espace en communication avec la pièce interne du bâtiment vers un second poste à l'extérieur de la section d'étable,
**caractérisée en ce que**
- la section du premier conduit (23a) est réduite dans la direction de la première extrémité du premier conduit (23a) vers la seconde extrémité du premier conduit (23a), et/ou
- la section du second conduit (23b) est réduite dans la direction de la première extrémité du second conduit (23b) vers la seconde extrémité du second conduit (23b).

13. Section d'étable (2, 3, 45, 46, 51) selon la revendication 12, **caractérisée en ce que** la seconde quantité d'air est menée hors de la pièce interne de la section d'étable ou hors d'un espace en communication avec la pièce interne vers un second poste à l'extérieur de la section d'étable via un ou plusieurs postes intermédiaires.

14. Section d'étable (2, 3, 45, 46, 51) selon la revendication 12 ou 13, **caractérisée en ce que** la première quantité d'air est dirigée dans la pièce interne de la section d'étable ou dans l'espace en communication avec la pièce interne et/ou la seconde quantité d'air est dirigée hors de la pièce interne de la section d'étable ou hors de l'espace en communication avec la pièce interne via des éléments de filtre (61).

15. Section d'étable (2, 3, 45, 46, 51) selon la revendication 12, **caractérisée en ce que** les éléments de filtre (61) sont agencés dans la paroi circonférentielle du bâtiment.

16. Section d'étable (2, 3, 45, 46, 51) selon l'une quelconque des revendications précédentes 12 à 15, **caractérisée en ce que** la section d'étable (2, 3, 45, 46, 51) comprend un certain nombre de conduits d'enlèvement du fumier (22, 60) s'étendant sensiblement parallèlement à au moins l'un du premier et/ou du second conduit (23a, 23b), et dans laquelle les premier et second trous (30, 31) dans le au moins un premier et le au moins un second conduit (23a, 23b), respectivement, sont agencés en communication fluidique avec le conduit d'enlèvement du fumier (22, 60).

17. Section d'étable (2, 3, 45, 46, 51) selon la revendication 16, **caractérisée en ce que** les conduits d'enlèvement du fumier (22, 60) et le premier et/ou second conduit (23a, 23b) ont une paroi commune, ou **en ce que** les conduits d'enlèvement du fumier (22, 60) et/ou le premier conduit et/ou le second conduit (23a, 23b) sont agencés à distance les uns des autres.

18. Section d'étable (2, 3, 45, 46, 51) selon la revendication 16 ou 17, **caractérisée en ce que** les conduits d'enlèvement du fumier (22, 60) et/ou le premier conduit et/ou le second conduit (23a, 23b) sont en communication fluidique via des tuyaux s'étendant entre les premiers et/ou les seconds trous (30, 31) et les conduits d'enlèvement du fumier (22, 60).

19. Section d'étable (2, 3, 45, 46, 51) selon l'une quelconque des revendications précédentes 16 à 18, **caractérisée en ce que** les conduits d'enlèvement du fumier (22, 60) et un premier conduit ou un second conduit (23a, 23b) associé sont dimensionnés et agencés les uns par rapport aux autres pour empêcher l'entrée de déchets solides provenant de la section d'étable dans le premier et/ou le second conduit (23a, 23b).

20. Section d'étable (2, 3, 45, 46, 51) selon l'une quelconque des revendications précédentes 12 à 19, **caractérisée en ce que** l'air qui doit être échangé dans la pièce interne de la section d'étable (2, 3, 45, 46, 51) ou dans l'espace en communication avec la pièce interne, a une teneur en au moins un contaminant gazeux, tel que l'ammoniac, et/ou au moins un contaminant particulaire, tel que la poussière.

21. Section d'étable (2, 3, 45, 46, 51) selon l'une quelconque des revendications précédentes 12 à 20, **caractérisée en ce que** l'air, qui est amené via le premier conduit (23a) vers la pièce interne ou l'espace en communication avec la pièce interne du bâtiment, a une teneur en un additif, facultativement choisi dans le groupe comprenant des moyens de fixation de la poussière dans l'air dans la pièce interne ou dans l'espace en communication avec la pièce interne du bâtiment, l'ozone, des médicaments en suspension dans l'air ou solubles dans l'air, des moyens de purification de l'air, et/ou des agents odorisants.

22. Section d'étable (2, 3, 45, 46, 51) selon l'une quelconque des revendications précédentes 12 à 21, **caractérisée en ce que** la première et/ou la seconde quantité d' air sont dirigées vers et en provenance de la pièce interne ou de l'espace en communication avec la pièce interne à sections d'étable du bâtiment, respectivement, au moyen d'un moyen de pompage, d'un moyen d'aspiration ou d'un moyen de souffleuse (28) facultativement par commande d'amortisseurs motorisés.

23. Section d'étable (2, 3, 45, 46, 51) selon l'une quelconque des revendications précédentes 12 à 22, **caractérisée en ce que** la première et/ou la seconde quantité d'air constituent une sous-quantité du volume total d'air de la pièce interne.

24. Section d'étable (2, 3, 45, 46, 51) selon l'une quelconque des revendications précédentes 12 à 23, **caractérisée en ce que** l'air, qui est dirigé vers la pièce interne ou l'espace en communication avec la pièce interne, est régulé en température.

25. Section d'étable (2, 3, 45, 46, 51) selon l'une quelconque des revendications précédentes 12 à 24, **caractérisée en ce qu'**au moins l'un des trous (30, 31) du premier et/ou du second conduit (23a, 23b) s'étend de façon oblique à travers la paroi du conduit respectif dans la direction d'écoulement de l'air d'écoulement, et/ou de façon oblique dans une direction vers le plancher.

26. Section d'étable (2, 3, 45, 46, 51) selon l'une quelconque des revendications précédentes 12 à 25, **caractérisée en ce qu'**une section d'étable (2, 3, 45, 46, 51) est divisée en sous-sections séparées par des zones de passage à pied (16, 55', 55") et/ou des parois, et **en ce que** lesdites sous-sections sont placées les unes par rapport aux autres de sorte que la distance totale de transport d'un animal d'élevage est la plus courte possible mesurée pendant un cycle de l'insémination à l'insémination.

27. Section d'étable (2, 3, 45, 46, 51) selon l'une quelconque des revendications précédentes 12 à 26, **caractérisée en ce que** l'écoulement de la première quantité d'air à travers le premier conduit (23a) et l'écoulement de la seconde quantité d'air à travers le second conduit (23b) créent un écoulement d'air transversal à un conduit d'enlèvement du fumier (22, 60) inséré entre le premier conduit (23a) et le second conduit (23b).

28. Agencement d'étable (1, 44) comprenant au moins deux sections d'étable (2, 3, 45, 46, 51) selon l'une quelconque des revendications précédentes 12 à 18, agencées à distance l'une de l'autre, et dans lequel le procédé selon l'une quelconque des revendications précédentes 1 à 11 est utilisé, **caractérisé en ce que** les seconds postes des au moins deux sections d'étable (2, 3, 45, 46, 51) sont agencés à l'intérieur ou ouverts dans le même bâtiment d'évacuation (4, 25, 64), de préférence dans une tour d'évacuation ayant une extrémité d'évacuation supérieure, et où les au moins deux sections d'étable (2, 3, 45, 46, 51) sont agencées sensiblement symétriquement autour du même bâtiment d'évacuation (4, 25, 64).

29. Agencement d'étable (1, 44) selon la revendication 28, **caractérisé en ce que** l'agencement d'étable (1) comprend au moins une section d'étable (2, 3, 45, 46, 51) agencée pour différentes étapes de l'élevage d'animaux et de préférence choisie dans le groupe comprenant des sections d'étable (2, 3, 45, 46, 51) agencées pour les animaux en gestation, une section d'étable (2, 3, 45, 46, 51) pour les petits animaux, une section d'étable (2, 3, 45, 46, 51) pour l'élevage, une section de maternité, telle qu'une section pour mettre bas, une section pour les veaux, une section pour les poulains et/ou une section pour les agneaux, une section d'étable (2, 3, 45, 46, 51) pour l'insémination et/ou une section d'étable (2, 3, 45, 46, 51) pour l'isolement arbitraire d'animaux.

30. Système de conduit de ventilation (23) pour échanger au moins une partie de l'air dans au moins une partie d'un bâtiment ayant une pièce interne et un plancher, dans lequel le système de conduit de ventilation (23) comprend
- un premier conduit s'étendant sous le plancher du bâtiment et configuré avec un certain nombre de premiers trous espacés (30) dans la direction longitudinale,
- un second conduit s'étendant sous le plancher du bâtiment et configuré avec un certain nombre de seconds trous espacés (31) dans la direction longitudinale,
- un premier moyen pour, via une première extrémité du premier conduit, aspirer, pomper ou souffler une première quantité d'air dans une pièce interne du bâtiment ou dans un espace en communication avec la pièce interne du bâtiment à travers les premiers trous (30), et
- un second moyen pour, via une première extrémité du second conduit, aspirer, pomper ou souffler une seconde quantité d'air provenant de la pièce interne du bâtiment ou d'un espace en communication avec la pièce interne du bâtiment à travers les seconds trous (31), et où le premier moyen et le second moyen sont identiques ou différents,
**caractérisé en ce que**
- la section du premier conduit (23a) est réduite dans la direction de la première extrémité du premier conduit (23a) vers la seconde extrémité du premier conduit (23a), et/ou
- la section du second conduit (23b) est réduite dans la direction de la première extrémité du second conduit (23b) vers la seconde extrémité du second conduit (23b),
- la première extrémité du premier conduit (23a) fait face à la seconde extrémité du second conduit (23b) ou est contre la première extrémité du second conduit (23b), où
- un premier conduit (23a) et un second conduit (23b) sont agencés à distance l'un de l'autre ou ont une paroi commune.

31. Système de conduit de ventilation (23) selon la revendication 30, **caractérisé en ce que** les premiers trous (30) et/ou les seconds trous (31) sont formés sur le côté ou dans la zone du premier conduit (23a) et/ou du second conduit (23b), respectivement, faisant face à la pièce interne ou à l'espace en communication avec la pièce interne du bâtiment.

32. Système de conduit de ventilation (23) selon la revendication 30 ou 31, **caractérisé en ce que** l'espace en communication avec la pièce interne du bâtiment est un conduit d'enlèvement du fumier (22, 60).

33. Système de conduit de ventilation (23) selon la revendication 30, 31 ou 32, **caractérisé en ce que** l'écoulement de la première quantité d'air à travers le premier conduit (23a) et l'écoulement de la seconde quantité d'air à travers le second conduit (23b) créent un écoulement d'air transversal à un conduit d'enlèvement du fumier (22, 60) inséré entre le premier conduit (23a) et le second conduit (23b).

34. Système de conduit de ventilation (23) selon la revendication 33, **caractérisé en ce que** l'écoulement d'air transversal au conduit d'enlèvement du fumier (22, 60) a un débit entre 0,1 1 et 0,8 m/s, de préférence entre 0,3 et 0,5 m/s.

35. Système de conduit de ventilation (23) selon la revendication 33, **caractérisé en ce que** l'angle entre la paroi commune (34, 36) et l'axe d'écoulement longitudinal d'un conduit (23a, 23b) est constant le long de la totalité de la longueur du conduit (23a, 23b).

36. Système de conduit de ventilation (23) selon l'une quelconque des revendications précédentes 30 à 35, **caractérisé en ce que** l'angle entre deux parois opposées d'un conduit (23a, 23b) est inférieur à 90°, de préférence inférieur à 60°, et de manière davantage préférée inférieur à 45° le long de la totalité de la longueur du conduit (23a, 23b).

37. Système de conduit de ventilation (23) selon l'une quelconque des revendications précédentes 30 à 36, **caractérisé en ce que** la section du premier et/ou du second conduit (23a, 23b) a une circonférence annulaire, qui est au moins partiellement circulaire, ovale, elliptique, quadratique, rectangulaire ou polygonale.

38. Système de conduit de ventilation (23) selon l'une quelconque des revendications précédentes 30 à 37, **caractérisé en ce qu'**au moins l'un du premier conduit (23a) ou du second conduit (23b) est constitué d'un certain nombre de sections de conduit raccordées en série (23'), et les deux sont de préférence constitués de sections de conduit raccordées en série (23').

39. Utilisation du système de conduit de ventilation (23) selon l'une quelconque des revendications précédentes 30 à 3 8 , dans le procédé selon l'une quelconque des revendications précédentes 1 à 11 dans une section d'étable selon l'une quelconque des revendications précédentes 12 à 27 et/ou un agencement d'étable selon l'une quelconque des revendications précédentes 28 et 29, pour optimiser la distance totale de transport d'un animal d'élevage, mesurée pendant un cycle de l'insémination à l'insémination, de sorte que cette distance de transport soit la plus courte possible.

40. Système d'organisation, d' agencement et/ou d'exploitation d'une section d' étable (2, 3, 45, 46) selon l'une quelconque des revendications précédentes 12 à 27 et/ou d'un agencement d'étable (1) selon l'une quelconque des revendications précédentes 28 et 29, **caractérisé en ce que** le système comprend la fourniture d'une section d'étable (2, 3, 45, 46) et/ou d'un agencement d'étable (1), qui sont divisés en des sous-sections séparées par des zones de passage à pied (16) et/ou des parois, dans lequel lesdites sous-sections sont placées les unes par rapport aux autres d'une façon qui assure que la distance totale de transport d'un animal d'élevage est la plus courte possible mesurée pendant un cycle de l'insémination à l'insémination, et **en ce que** le système comprend un moyen informatique programmé pour optimiser logistiquement l'organisation, l'agencement et/ou l'exploitation.
